# EUROPEAN PATENT SPECIFICATION

(11) **EP 3 020 566 B1**
(45) Date of publication and mention of the grant of the patent: **22.03.2017**
(21) Application number: 14822845.5
(22) Date of filing: 09.07.2014
(51) Int. Cl.: B41M 5/00, B41J 2/01, C09D 11/30

(54) **IMAGE FORMING METHOD AND IMAGE RECORDING MATERIAL**
BILDERZEUGUNGSVERFAHREN UND BILDAUFZEICHNUNGSMATERIAL
PROCÉDÉ DE FORMATION D'IMAGE ET MATÉRIAU D'ENREGISTREMENT D'IMAGE

(30) Priority: 12.07.2013 JP 2013147078
(43) Date of publication of application: 18.05.2016
(73) Proprietor: Fujifilm Corporation, Minato-ku Tokyo 106-8620 (JP)
(72) Inventor: OHMOTO, Makoto, Ashigarakami-gun Kanagawa 258-8577 (JP)
(74) Representative: Hoffmann Eitle
(86) International application number: PCT/JP2014/068338
(87) International publication number: WO 2015/005394

(56) References cited:
- EP-A1- 2 535 380
- JP-A- 2005 281 523
- JP-A- 2006 008 911
- JP-A- 2008 013 657
- JP-A- 2008 013 658
- JP-A- 2008 036 930
- JP-A- 2011 184 556
- JP-A- 2012 025 911
- US-A1- 2006 293 410
- US-A1- 2009 233 059
- US-A1- 2012 274 685

## Description

### BACKGROUND OF THE INVENTION

### 1. Field of the Invention

The present invention relates to an image forming method.

### 2. Description of the Related Art

For non-absorbent or low-absorbent recording media such as glass, metals, and plastics, analogue printing such as flexographic printing has been conventionally carried out; however, in recent years, from the viewpoints of small lot, multi- products, short delivery times, and low cost, digital printing based on inkjet printing is also being put into practice.

The printing systems applied to inkjet printing are roughly classified into multiple pass systems and single pass systems. In regard to the former systems, since the substrate is scanned with a head for two or more times, there is an advantage in view of image quality that even if a jetting failure occurs in the head nozzle, image streaks are not very noticeable; however, there are also disadvantages such as slow printing speeds and low productivity.

In regard to the latter systems, since printing is completed by scanning for one time, there are advantages such as fast printing speeds and high productivity; however, there is a disadvantage that once a "jetting failure" by which ink is not jetted occurs in the head nozzle, the jetting failure is likely to lead to image deterioration.

In order to realize inkjet printing with high productivity, it may be considered to increase the conveyance speed of the recording medium using a single pass system, for example, to convey the recording medium at a speed of 30 m/min or higher; however, the ink is required to have high continuous jettability or intermittent jettability. Furthermore, when the recording medium is conveyed at a high speed, there are occasions in which the recording medium that is a lightweight thin layer may meander or flap, and a problem is likely to occur in which the recording medium floating up at the time of conveyance may be brought into contact with the head and thereby causing a failure in ink jetting. The problem of the contact between the recording medium and the head can be solved by adjusting the distance between the recording medium and the head to be large; however, if only the aforementioned distance is adjusted to a large value while the conventional inkjet printing conditions are adopted, on the occasion of small droplet jetting with a droplet volume of several picoliters (pL), the landing accuracy is deteriorated, and image deterioration occurs. Furthermore, in order to make the droplet volume large, it is necessary to use a head which is capable of jetting large droplets; however, because the nozzle diameter becomes large compared to conventional heads for inkjet printing, it is necessary to use an ink having a high viscosity of 10 mPa·s or more in order to jet the ink normally.

Regarding ink compositions having high viscosities, solvent inks, UV inks and the like are generally known; however, in recent years, it is desirable to use aqueous inks from the viewpoints of stability and environmental influence. Conventionally, the viscosity of an aqueous inkjet ink is several mPa·s, and it is difficult to perform printing directly with such an ink using an inkjet recording apparatus equipped with a commonly used large droplet head.

Thus, ink compositions which use water-soluble thickeners or particular water-soluble organic solvents have been suggested as aqueous inkjet inks having relatively high viscosities (see, for example, JP2010-65205A and JP2010-70669A).

### SUMMARY OF THE INVENTION

It is described that these ink compositions can have the viscosity adjusted to 5 mPa·s to 20 mPa·s. However, a viscosity of about 5 mPa·s to 6 mPa·s is disclosed in the specific embodiments. Such an ink is suitable for general inkjet recording; however, in the current situation, in order to achieve high-speed printing by an inkjet system, it is desirable to apply a new high-viscosity ink composition without deteriorating the storage stability of the ink or the dryability of the jetted ink image.

Furthermore, many inkjet heads that are capable of jetting large liquid droplets have been developed in connection with solvent inks, UV inks and the like, and it is general for such inkjet heads to have nozzle surfaces with hydrophilic properties. When it is attempted to jet an aqueous ink directly using such an inkjet head, there is a problem that the aqueous ink may easily overflow from the nozzle, or the ink is dried to become solid and may easily cause defective jetting. In consideration of these problems, means for adding a nonvolatile water-soluble organic solvent or a solid humectant to an aqueous ink may be taken; however, when this means is taken, a problem that dryability of the printed ink is deteriorated may occur.

Under such circumstances as described above, an object of the present invention is to provide a method for forming an inkjet image, by which an image recorded material having an image with high quality is obtained even when high-speed printing is performed, and high productivity can be manifested; and an image recorded material obtained by the image forming method.

The inventors of the present invention conducted a thorough investigation, and as a result, the inventors achieved the present invention by which inkjet printing having high productivity can be realized with a high level of safety and reduced environmental influence.

That is, there can be provided a method for forming an inkjet image with excellent continuous jettability and intermittent jettability and with high productivity and an increased printing speed (capable of high frequency jetting), without deteriorating the storage stability of the ink, by using an ink composition which includes a water-soluble polymer having a number average molecular weight of 1,000 or more and a water-soluble organic solvent, as well as a surfactant having a HLB in the range of 3 to 12 and a number average molecular weight of less than 1,000, and has a viscosity at 30°C in the range of 10 mPa·s to 14 mPa·s.

Specific means for achieving the problems described above are as follows.
<1> An image forming method comprising forming an image by jetting, onto a recording medium, an ink composition as liquid droplets each having a volume of from 60 pL to 120 pL, by using an inkjet head, the ink composition comprising a water-soluble polymer having a number average molecular weight of 1,000 or more, a water-soluble organic solvent, and a surfactant having an HLB in a range of from 3 to 12 and a number average molecular weight of less than 1,000, and the ink composition having a viscosity at 30°C in a range of from 10 mPa·s to 14 mPa·s.
<2> The image forming method according to <1>, wherein a difference between an SP value of the water-soluble polymer and an SP value of the water-soluble organic solvent is from 1 to 5.
<3> The image forming method according to <1> or <2>, wherein a content of the water-soluble polymer in the ink composition is from 1% by mass to 16% by mass.
<4> The image forming method according to any one of <1> to <3>, wherein an SP value of the water-soluble polymer is in a range of from 19 to 31.
<5> The image forming method according to any one of <1> to <4>, wherein an SP value of the water-soluble organic solvent is in a range of from 21 to 30.
<6> The image forming method according to any one of <1> to <5>, wherein the ink composition further includes polymer particles.
<7> The image forming method according to any one of <1> to <6>, wherein the ink composition has a surface tension in a range of from 35 mN/m to 37 mN/m.
<8> The image forming method according to any one of <1> to <7>, wherein a surface of a nozzle unit of the inkjet head contains at least one material selected from metals or compounds containing silicon.

Meanwhile, in regard to the description of a substituent (atomic group) in the present specification, unless particularly stated otherwise, a description without an indication of substitution or unsubstitution is used to mean to include an unsubstituted substituent as well as a substituent further having a substituent. For example, when an "alkyl group" is described, the alkyl group is used to mean to include an unsubstituted alkyl group and an alkyl group further having a substituent. The same also applies to other substituents (atomic groups).

A value range indicated using "to" in the present specification means a range that includes the values described before and after "to" as the lower limit value and the upper limit value.

In a case in which the amount of each component in the composition are mentioned in the present specification, when there are plural materials corresponding to each component in the composition, the amount of the component means the total amount of the plural materials present in the composition, unless particularly stated otherwise.

In regard to the term "process" as used in the present specification, not only an independent process but also a case in which a process cannot be clearly distinguished from other processes are intended to be included in the present term, as long as the predetermined purpose of the process is achieved.

According to the present invention, an inkjet image forming method which is capable of obtaining an image recorded material having an image with high quality even in a case in which high-speed printing is performed, and in which high productivity can be manifested.

### DESCRIPTION OF THE PREFERRED EMBODIMENTS

Hereinafter, specific exemplary embodiments of the present invention will be described in detail; however, the present invention is not intended to be limited to the following exemplary embodiments, and the present invention can be carried out by applying appropriate modification within the scope of the purpose of the present invention.

The image forming method of the present invention is an image forming method including forming an image by jetting, onto a recording medium, an ink composition as liquid droplets each having a volume of from 60 pL to 120 pL, by using an inkjet head, the ink composition including a water-soluble polymer having a number average molecular weight of 1,000 or more, a water-soluble organic solvent, and a surfactant having an HLB in a range of from 3 to 12 and a number average molecular weight of less than 1,000, and the ink composition having a viscosity at 30°C in a range of from 10 mPa·s to 14 mPa·s.

Meanwhile, high-speed printing according to the present invention means that the conveyance speed of the recording medium is a speed of 30 m/min or more, and preferably, the conveyance speed is 50 m/min or more, and more preferably 100 m/min or more.

In order to realize high-speed printing, it is essential that jetting of large liquid droplets can be achieved continuously or intermittently at a high frequency, and the "frequency" for ink jetting refers to the number of ink liquid droplets that can be jetted from a head per unit time, while a high frequency implies that ink liquid droplets can be jetted 1,000 or more times per second, that is, ink liquid droplets are jetted at a cycle of 1 kHz (1,000 times per second) or more. Meanwhile, at a conveyance speed of 30 m/min, a frequency of about 1,000 Hz (1 kHz) is required.

Similarly to the present invention, in order to enable high-speed printing with liquid droplets each having a volume of 60 pL to 120 pL, it is important to use an ink composition having the composition that will be described in detail below.

### [Inkjet ink composition]

First, the aqueous inkjet ink composition that is suitably used for the inkjet image forming method of the present invention (hereinafter, also referred to as "ink composition" or "ink") will be explained.

The ink composition used for the image forming method of the present invention includes at least a water-soluble polymer having a number average molecular weight of 1,000 or more (hereinafter, also referred to as "water-soluble polymer"), a water-soluble organic solvent, and a surfactant having a HLB in the range of 3 to 12 and a number average molecular weight of less than 1,000 (hereinafter, also referred to as "particular surfactant").

Furthermore, regarding the properties of the ink composition, the viscosity at 30°C is in the range of 10 mPa·s to 14 mPa·s.

When the viscosity of the ink composition is in the range described above, an image can be formed by jetting the ink composition as liquid droplets each having a volume of 60 pL to 120 pL using an inkjet head, and high-speed printing is realized. In other words, image formation is now enabled using an inkjet recording apparatus having an inkjet head which can jet ink as liquid droplets each having a volume of 60 pL to 120 pL.

Meanwhile, the ink composition may further include, if necessary, components such as a colorant and other additives.

The operating mechanism of the present invention is not clearly understood; however, the inventors of the present invention speculate the operating mechanism as follows.

When a water-soluble polymer having a number average molecular weight of 1,000 or more and a water-soluble organic solvent are incorporated into an ink composition, the viscosity of the ink composition can be appropriately maintained in the range of 10 mPa·s to 14 mPa·s at 30°C. Usually, there is a tendency that when the viscosity of an ink composition increases, the storage stability or jettability of the ink is decreased. According to the present invention, it is speculated that when the particular surfactant is further added to the ink composition, anti-foaming performance of the ink composition is enhanced, defective jetting caused by air bubbles when an ink composition having a relatively high viscosity is jetted is suppressed, and thus stability of the ink composition itself is also enhanced.

Therefore, even in a case in which ink is jetted as liquid droplets each having a volume of 60 pL to 120 pL using an inkjet head which can jet an ink as liquid droplets each having a volume of 60 pL to 120 pL, liquid overflow and liquid dripping from the ink nozzle are suppressed, and defective jetting caused by air bubbles is suppressed. Therefore, it is speculated that even in the case of performing printing while conveying a recording medium at a high speed, high-quality image formation by means of large liquid droplets is enabled while the distance between the nozzle and the recording medium is appropriately maintained.

Furthermore, according to a preferred embodiment of the present invention, when the difference between the SP value of the water-soluble polymer and the SP value of the water-soluble organic solvent is set to from 1 to 5, affinity between these components is enhanced, and continuous jettability, intermittent jettability, and image quality are further enhanced.

Hereinafter, the various components included in the ink composition related to the present invention will be described in detail.

### <Water-soluble polymer having number average molecular weight of 1,000 or more>

The water-soluble polymer that can be used for the present invention is not particularly limited as long as it is a polymer which has a number average molecular weight of 1,000 or more and is water-soluble, and the suitable kind and amount of addition of the polymer can be appropriately selected such that the viscosity of the ink at 30°C is within the range of 10 mPa·s to 14 mPa·s. When the water-soluble polymer is incorporated into the ink composition, the viscosity of the ink composition can be adjusted to an appropriate range.

Meanwhile, the "water-soluble polymer" according to the present invention refers to a polymer compound having a solubility (25°C) of 1 g or more in 100 g of water.

It is necessary that the water-soluble polymer is a polymer having a number average molecular weight of 1,000 or more, but it is preferable that the water-soluble polymer is a polymer having a number average molecular weight of 20,000 or more.

If the number average molecular weight is less than 1,000, there is a risk that the amount of addition for obtaining a desired viscosity may increase, and stability of the ink may be affected.

There are no particular limitations on the upper limit of the number average molecular weight; however, when the number average molecular weight becomes large, there is an advantage that the amount of addition can be decreased. On the other hand, in consideration of the storage stability or jettability of the ink, and from the viewpoint of jetting stability, the number average molecular weight is preferably 200,000 or less, more preferably 100,000 or less, and particularly preferably 20,000 or less.

Meanwhile, the number average molecular weight of the "water-soluble polymer" is a value measured by gel permeation chromatography (GPC). Regarding GPC, measurement was made using HLC-8020GPC (manufactured by Tosoh Corp.), and using TSKgel SuperHZM-H, TSKgel SuperHZ4000, and TSKgel SuperHZ200 (trade name, manufactured by Tosoh Corp., 4.6 mm ID x 15 cm) as columns and THF (tetrahydrofuran) as an eluent, by setting the set temperature of the column oven at 40°C. For the calculation of the number average molecular weight, polystyrene standards were used.

Regarding the water-soluble polymer, for example, any of a vinyl-based polymer, a polyether-based polymer, a polysaccharide-based polymer, an acrylic polymer, a pyrrolidone-based polymer, and a cellulose-based polymer may be used; and more preferred examples thereof include a polyether-based polymer and a pyrrolidone-based polymer, while a polyether-based polymer is particularly preferred.

More specific examples of the water-soluble polymer include gelatins, polyvinyl alcohols, various modified polyvinyl alcohols, polyvinylpyrrolidones, vinyl formals and derivatives thereof, and polyoxyalkylene glycols; polymers containing acrylic groups, such as polyacrylamides, polydimethylacrylamides, polydimethyl aminoacrylate, sodium polyacrylate, acrylic acid-methacrylic acid copolymer salts, sodium polymethacrylate, and acrylic acid-vinyl alcohol copolymer salts; natural polymers or derivatives thereof such as starch, oxidized starch, carboxyl starch, dialdehyde starch, dextrin, sodium alginate, gum arabic, casein, pullulan, dextran, and cellulose or derivatives thereof (for example, methyl cellulose, ethyl cellulose, carboxymethyl cellulose, and hydroxypropyl cellulose); and synthetic polymers such as polyethylene glycol, polypropylene glycol, polyvinyl ether, polyglycerin, maleic acid-alkyl vinyl ether copolymers, maleic acid-N-vinylpyrrole copolymers, styrene-maleic anhydride copolymers, polyoxyethylene glycol, polyoxyethylene glycol/polyoxypropylene glycol copolymers, and polyethyleneimine.

More preferred examples include polyvinylpyrrolidones, polyoxyalkylene glycols such as polyoxyethylene glycol, and polyoxyethylene glycol/polyoxypropylene glycol copolymers; and particularly preferred examples include polyoxyalkylene glycols, and among them, polyoxyethylene glycol and polyoxyethylene glycol/polyoxypropylene glycol copolymers.

The SP value (Okitsu method) of the water-soluble polymer related to the present invention is preferably in the range of 19 to 31, more preferably in the range of 19 to 26, and particularly preferably in the range of 20 to 26.

The SP value according to the present invention is a value obtained by the Okitsu method. Here, the Okitsu method is a method for calculating the SP value using the theoretical formula described in Journal of the Adhesion Society of Japan, Vol. 29, No. 6 (1993), pp. 249-259 (theoretical formula for the solubility parameter (SP value) suggested by Toshinao Okitsu). The SP value according to the present specification is a value obtained by this calculation method or a value obtained by referring to the values found in the literature.

Specific examples of the water-soluble polymer suitably used in the present invention are described below together with the SP values of the water-soluble polymers; however, the present invention is not intended to be limited to the following description.
- Polyethylene glycol (number average molecular weight (Mn) 2000, 4000, 8000, 20,000, 500,000, 100,000, SP value: 20.62)
- NEWPOL PE-68 (trade name, manufactured by Sanyo Chemical Industries, Ltd., polyoxyethylene glycol/polyoxypropylene glycol copolymer, Mn: 8800, SP value: 20.2)
- NEWPOL PE-78 (trade name, manufactured by Sanyo Chemical Industries, Ltd., Mn: 3400, SP value: 19.2)
- NEWPOL PE-108 (trade name, manufactured by Sanyo Chemical Industries, Ltd., Mn: 16,500, SP value: 20.2)
- NEWPOL PE-128 (trade name, manufactured by Sanyo Chemical Industries, Ltd., Mn: 25,000, SP value: 20.2)
- Polyvinylpyrrolidone (trade name, manufactured by Sanyo Chemical Industries, Ltd., Mn: 10,000, SP value: 25.37)
- Polyacrylamide (trade name, manufactured by Sanyo Chemical Industries, Ltd., Mn: 10,000, SP value: 30.96)

Among them, preferred examples include polyethylene glycol, NEWPOL PE-68 (20.2), NEWPOL PE-78 (19.2), NEWPOL PE-108 (20.2), NEWPOL PE-128 (20.2), and polyvinylpyrrolidone (25.37), and particularly preferred examples include polyethylene glycol, NEWPOL PE-68 (20.2), NEWPOL PE-78 (19.2), NEWPOL PE-108 (20.2), and NEWPOL PE-128 (20.2).

According to the present invention, the water-soluble polymer may be used singly, or in combination of two or more kinds thereof.

Generally, the content of the water-soluble polymer in the ink composition is preferably 1% by mass to 16% by mass, and more preferably in the range of 1% by mass to 12% by mass, relative to the total mass of the ink composition, from the viewpoint of obtaining a desired viscosity.

The amount of addition of the water-soluble polymer may vary depending on the kind or the molecular weight of the water-soluble polymer, and the water-soluble polymer can be added in an amount appropriately adjusted so as to obtain a desired viscosity.

### <Water-soluble organic solvent>

The ink composition related to the present invention includes a water-soluble organic solvent. The water-soluble organic solvent according to the present invention refers to an organic solvent which is liquid at 25°C and 1 atmosphere, and among others, a solvent having a vapor pressure at room temperature of 1 Pa or more and a SP value in the range of 21 to 30 is preferred. Furthermore, the water-soluble organic solvent according to the present invention refers to an organic solvent which dissolves in 100 g of water at 25°C in an amount of 1 g or more. Here, dissolution means a state in which cloudiness or phase separation is not recognized by observation with the naked eye.

The SP value of the water-soluble organic solvent is more preferably in the range of 21 to 26, and particularly preferably in the range of 22 to 24.

Meanwhile, as will be described below, the difference between the SP value of the water-soluble polymer and the SP value of the water-soluble organic solvent is preferably from 1 to 5, and in consideration of this relationship, the combination of the water-soluble organic solvent and the water-soluble polymer can be appropriately selected and used.

If the SP value of the water-soluble organic solvent is too low, it becomes difficult to uniformly mix the water-soluble organic solvent with the ink composition, and stability may be deteriorated. Also, when the ink dries in the nozzle unit, the surface tension of the ink is likely to be lowered, and jettability is likely to be deteriorated. On the other hand, if the SP value is too high, when the ink dries at the nozzle unit, the surface tension of the ink is likely to increase, and jettability is likely to be deteriorated.

Specific examples of the water-soluble organic solvent that is suitably used in the present invention are mentioned below together with the SP values of the water-soluble organic solvents; however, the present invention is not intended to be limited to the following description.
- 2-Pyrrolidone (SP value: 29.12)
- Diethylene glycol (SP value: 25.5)
- 2-Methyl-1,3-propanediol (SP value: 24.17)
- Tetraethylene glycol (SP value: 23.36)
- Dipropylene glycol (SP value: 23)
- Tripropylene glycol (SP value: 21.8)
- Tripropylene glycol monobutyl ether (SP value: 21.14)

Among them, preferred examples include diethylene glycol, 2-methyl-1,3-propanediol, tetraethylene glycol, dipropylene glycol, and tripropylene glycol, and particularly preferred examples include tetraethylene glycol (SP value: 23.36) and dipropylene glycol (SP value: 23).

According to the present invention, the water-soluble organic solvent may be used singly, or two or more kinds thereof may be used in mixture.

The amount of addition of the water-soluble organic solvent is preferably in the range of 2% by mass to 30% by mass, more preferably in the range of 2% by mass to 20% by mass, and particularly preferably in the range of 5% by mass to 20% by mass.

When the amount of addition of the water-soluble organic solvent is in the range described above, drying of the ink composition at the nozzle unit does not easily occur, and the stability of the ink composition is maintained more satisfactorily.

Furthermore, the mixing ratio of the water-soluble organic solvent and the water-soluble polymer according to the present invention is, as a mass ratio, preferably 1:1 to 8:1, more preferably 1:1 to 5:1, and particularly preferably 1:1 to 4:1.

### <Regarding SP values of water-soluble polymer and water-soluble organic solvent>

In regard to the combination of the water-soluble polymer and the water-soluble organic solvent according to the present invention, the difference between the SP value of the water-soluble organic solvent and the SP value of the water-soluble polymer used in combination therewith (ΔSP) is preferably from 1 to 5, more preferably from 1 to 3, and particularly preferably from 2 to 2.5.

When the difference between the SP values of the two components is in the range described above, the occurrence of any undesirable contraction or expansion of the water-soluble polymer in the ink composition is controlled, and the amount of addition of the water-soluble polymer for obtaining a desired viscosity is appropriately maintained. Also, an increase in viscosity or a change in the surface tension at the time when the ink composition begins to dry at the nozzle unit is controlled, deterioration of jettability caused by the viscosity increase or surface tension change is prevented, and thus jetting stability is further enhanced.

Therefore, on the occasion of selecting the water-soluble organic solvent and the water-soluble polymer, it is preferable to use a combination in which the difference between the SP values of the two components is from 1 to 5, from the viewpoint of further enhancing jettability and image quality.

### <Surfactant having HLB in range of 3 to 12 and having number average molecular weight of less than 1,000>

The particular surfactant according to the present invention is a surfactant having a HLB (Hydrophile-Lipophile Balance) in the range of 3 to 12; however, a surfactant having a HLB of 3 to 10 is more preferred, and a surfactant having a HLB of 3 to 8 is particularly preferred.

Here, the HLB is a value calculated by Griffin's calculation formula: 20 x (Mw / M) (wherein Mw = sum of the formula weights of hydrophilic moieties of a nonionic surfactant, and M = number average molecular weight of the nonionic surfactant).

Surfactants are originally used for the adjustment of surface tension; however, on the other hand, surfactants may cause the ink composition to foam so that the ink supplied into the head cannot be sufficiently degassed, or air is trapped into the orifices at the nozzle unit from the outside, and thereby surfactants may cause deterioration of jettability, such as the occurrence of jetting failure.

As the HLB of a surfactant becomes smaller, anti-foaming performance becomes satisfactory, and foaming of the ink or trapping of air can be prevented. Thus, jettability is satisfactorily maintained.

Regarding the means for enhancing the anti-foaming performance, means for adding an anti-foaming agent may be taken; however, under normal circumstances, when an anti-foaming agent having hydrophobicity is added to an ink, the anti-foaming agent is not dissolved and dispersed uniformly in an aqueous ink. Therefore, there is a risk that there may be fluctuations in the performance of jettability. Particularly, it is speculated that when a water-insoluble silicone-based compound is included or hydrophobic microparticles are included, the anti-foaming agent exists in a particulate form in the ink, minute fluctuations in the surface tension occur at the ink interface, and fluctuations occur in the jettability.

Meanwhile, according to the present invention, since the particular surfactant is used, excellent anti-foaming performance is manifested; however, there is no risk of deteriorating the uniformity of the ink composition, and rather, the particular surfactant has more advantageous influence, which is preferable.

The particular surfactant that can be used in the present invention is not particularly limited as long as it is a surfactant having the HLB in the range described above.

Regarding the particular surfactant that is suitably used for the present invention, commercially available products may be used, and examples thereof include OLFINE E1008 (trade name, manufactured by Nissin Chemical Industry Co., Ltd., number average molecular weight: 578.78, HLB: 10 to 12), OLFINE E1006 (trade name, manufactured by Nissin Chemical Industry Co., Ltd., number average molecular weight: 490.67, HLB: 9 to 10), SURFYNOL 2520 (trade name, manufactured by Air Products and Chemicals, Inc., number average molecular weight: 562.78, HLB: 8), SURFYNOL 440 (trade name, manufactured by Air Products and Chemicals, Inc., number average molecular weight: 380.54, HLB: 8), SURFYNOL SE-F (trade name, manufactured by Air Products and Chemicals, Inc., number average molecular weight: unknown, HLB: 6), SURFYNOL 420 (trade name, manufactured by Air Products and Chemicals, Inc., number average molecular weight: 270.41, HLB: 4), SURFYNOL 104 (trade name, manufactured by Air Products and Chemicals, Inc., number average molecular weight: 226.36, HLB: 4), and SURFYNOL DF110D (trade name, manufactured by Nissin Chemical Industry Co., Ltd., number average molecular weight: 254.41, HLB: 3).

Among them, preferred examples include SURFYNOL 2520, SURFYNOL 440, SURFYNOL SE-F, SURFYNOL 420, SURFYNOL 104, and SURFYNOL DF110D, and particularly preferred examples include SURFYNOL SE-F, SURFYNOL 420, SURFYNOL 104, and SURFYNOL DF110D.

Meanwhile, the number average molecular weight of the "surfactant" can be determined by calculation in a case in which the structure can be clearly comprehended, and the number average molecular weight can also be measured by gel permeation chromatography (GPC). Regarding GPC, measurement was made using HLC-8020GPC (trade name, manufactured by Tosoh Corp.), and using TSKgel SuperHZM-H, TSKgel SuperHZ4000, and TSKgel SuperHZ200 (all trade names, manufactured by Tosoh Corp., 4.6 mm ID x 15 cm) as columns and THF (tetrahydrofuran) as an eluent, by setting the set temperature of the column oven at 40°C. For the calculation of the number average molecular weight, polystyrene standards were used.

For the ink composition related to the present invention, the particular surfactant may be used singly, or two or more kinds thereof may be used in combination.

The amount of addition of the particular surfactant in the ink composition according to the present invention is not particularly limited as long as a defined surface tension is obtained; however, it is preferable that the particular surfactant is added in an amount in the range of 0.1 % by mass to 2% by mass, more preferably in the range of 0.1 % by mass to 1.5% by mass, and particularly preferably in the range of 0.2% by mass to 1% by mass.

### <Water>

The ink composition related to the present invention is a water-based ink composition including water.

Regarding the water, it is preferable to use ion exchanged water, distilled water or the like, which does not contain impurities.

The content of water in the ink composition of the present invention is not particularly limited; however, from the viewpoint of securing storage stability and jetting stability, the content is preferably 10% by mass to 70% by mass, more preferably 20% by mass to 60% by mass, and even more preferably 30% by mass to 60% by mass.

### <Polymer particles>

The ink composition related to the present invention may further include polymer particles.

When the ink composition includes polymer particles, satisfactory storage stability and jetting stability of the ink are obtained, and also, the resistance to scratching of images and flexibility are improved.

Examples of the polymer particles include particles of resins such as a thermoplastic, thermosetting or modified acrylic resin, a urethane-based resin, an epoxy-based resin, a polyether-based resin, a polyamide-based resin, an unsaturated polyester-based resin, a phenolic resin, a silicone-based resin, an olefin-based resin, a fluorine-based resin, a styrene-based resin, a polyvinyl-based resin (for example, vinyl chloride, vinyl acetate, polyvinyl alcohol, or polyvinyl butyral), an alkyd resin, a polyester-based resin (for example, a phthalic acid resin), an amino-based material (for example, a melamine resin, a melamine-formaldehyde resin, an amino-alkyd co-condensation resin, or a urea resin), and copolymers or mixtures thereof.

Regarding the polymer particles, particles may be used singly, or two or more kinds may be used in combination. Furthermore, it is also acceptable to use polymer particles composed of a mixture of two or more kinds of polymers, or polymer particles composed of two or more kinds of monomers bonded together.

According to the present invention, from the viewpoint that storage stability and jetting stability of the ink are improved, the polymer particles are preferably particles of a polymer having at least one structure selected from the group consisting of a poly(meth)acrylic structure, a polystyrene structure and a polyurethane structure; from the viewpoint that excellent recorded images attributable to scratch resistance and flexibility may be obtained, the polymer particles are more preferably particles of a polymer having a polyurethane structure (hereinafter, may be referred to as "polyurethane particles"); and particularly, the polymer particles are more preferably particles of a polymer having only a polyurethane structure.

It is speculated that polyurethane particles are preferable from the viewpoint described below. That is, it is speculated that a polyurethane-based resin that forms polyurethane particles is formed from a urethane site that is capable of a strong interaction between polymers as in the case of hydrogen bonding, and a non-urethane site that has a relatively weak interaction between polymers, so that when a film of the ink is formed, the sites having a relatively strong interaction and the sites having a relatively weak interaction respectively gather together and construct a sea-island structure as a microscopic structure, and the polyurethane acquires flexibility as a result of the construction of this sea-island structure. It is speculated that since polyurethane intrinsically exhibits flexibility as such, a polymer having a high Tg can be used in contradiction to the conventionally known examples of using low-Tg polymer particles, and polyurethane can form an ink film (ink image) having flexibility, strength, and excellent scratch resistance.

Therefore, polyurethane is more advantageous particularly when a non-absorbent or low-absorbent recording medium, with which it is difficult to obtain scratch resistance, is used.

Regarding the polymer particles, self-dispersing polymer particles having self-dispersibility are suitable. Particles of a self-dispersing polymer mean particles of a water-insoluble polymer which, when brought to a dispersed state (particularly, a dispersed state according to a phase inversion emulsification method) in the absence of a surfactant, can be in a dispersed state in an aqueous medium by means of the functional groups (particularly, acidic groups or salts thereof) carried by the polymer itself, and which does not contain a free emulsifying agent.

Particles of a self-dispersing polymer are preferred from the viewpoints of jetting stability and the liquid stability (particularly, dispersion stability) of a system containing a pigment, and above all, particles of a self-dispersing polymer having a carboxyl group are more preferred.

A dispersed state includes both an emulsified state (emulsion) in which a water-insoluble polymer is dispersed in a liquid state in an aqueous medium, and a dispersed state (suspension) in which a water-insoluble polymer is dispersed in a solid state in an aqueous medium.

From the viewpoint of fixability when prepared into a liquid composition, the water-insoluble polymer is preferably a water-insoluble polymer which can form a dispersed state in which the water-insoluble polymer is dispersed in a solid state.

Regarding the method for preparing an emulsified or dispersed state of a self-dispersing polymer, that is, an aqueous dispersion of a self-dispersing polymer, a phase inversion emulsification method may be mentioned. An example of the phase inversion emulsification method includes a method of dissolving or dispersing a self-dispersing polymer in a solvent (for example, a hydrophilic organic solvent), subsequently introducing the resultant directly into water without adding a surfactant, stirring and mixing the mixture in a state in which the salt-producing groups (for example, acidic groups) of the self-dispersing polymer have been neutralized, removing the solvent, and then obtaining an aqueous dispersion that is in an emulsified or dispersed state.

A dispersed state of particles of a self-dispersing polymer refers to a state in which, even after a solution obtained by dissolving 30 g of a water-insoluble polymer in 70 g of an organic solvent (for example, methyl ethyl ketone), a neutralizing agent capable of neutralizing the salt-producing groups of the water-insoluble polymer by 100% (if the salt-producing group is anionic, sodium hydroxide; and if the salt-producing group is cationic, acetic acid), and 200 g of water are mixed and stirred (apparatus: stirring blade-equipped stirring apparatus, speed of rotation: 200 rpm, for 30 minutes, 25°C), and then the organic solvent is removed from the mixed liquid, it can be confirmed by visual inspection that the dispersed state exists stably for at least one week at 25°C.

Furthermore, a water-insoluble polymer refers to a polymer which, when the polymer is dried for 2 hours at 105°C and then dissolved in 100 g of water at 25°C, dissolves in an amount of dissolution of 10 g or less, and the amount of dissolution is preferably 5 g or less, and more preferably 1 g or less. The amount of dissolution varies depending on the kind of the salt-producing group of the water-insoluble polymer, and is an amount of dissolution obtainable when the water-insoluble polymer is neutralized 100% with sodium hydroxide or acetic acid.

The aqueous medium is configured to include water, and may further include a hydrophilic organic solvent as necessary. According to the present invention, it is preferable that the aqueous medium is composed of water and a hydrophilic organic solvent in an amount of 0.2% by mass or less with respect to water, and it is more preferable that the aqueous medium is composed of water.

It is preferable that the main chain skeleton of the water-insoluble polymer is polyurethane.

Suitable examples of the monomer that constitutes a condensation-based polymer are described in JP2001-247787A. Polyurethane is synthesized by a polyaddition reaction using a diol compound and a diisocyanate compound as raw materials. Regarding the details of the diol compound and the diisocyanate compound, reference can be made to the description of paragraphs [0031] to [0036] of JP2001-247787A.

Furthermore, according to the present invention, it is preferable that the polymer particles include particles of a polyurethane having a structure represented by the following Formula (PU-1):

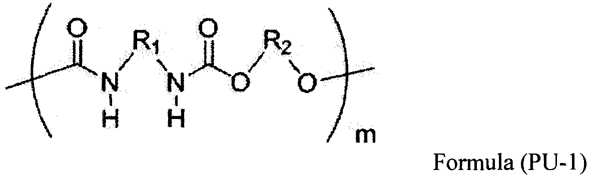

In Formula (PU-1), R₁ represents an aliphatic group or an aromatic group; and R₂ represents a residue of a diol compound.

Examples of the aliphatic group represented by R₁ include divalent groups derived from isophorone diisocyanate (IPDI), hydrogenated m-xylene diisocyanate (H6XDI), hydrogenated diphenylmethane diisocyanate (H12MDI), hexamethylene diisocyanate (HDI), and the like.

Examples of the aromatic group represented by R₁ include divalent groups derived from m-xylene diisocyanate (XDI), tolylene diisocyanate (TDI), diphenylmethane diisocyanate (MDI), and the like.

From the viewpoint of the durability of recorded images, it is preferable that R₁ is an aliphatic group. This is speculated to be because when a relatively soft structure is selected, flexibility of the ink film obtained after the ink has been fixed onto the recording medium is enhanced, and the durability of recorded images is enhanced.

R₂ represents a residue of a diol compound, and this residue is preferably a group selected from an alkylene group, a polyether group, a polyester group, a polycarbonate group, and a polycaprolactone group; more preferably a group selected from an alkylene group, a polyether group, a polyester group, and a polycaprolactone group; and particularly preferably a group selected from an alkylene group having 1 to 30 carbon atoms, an alkyl ether group having 2 to 60 carbon atoms, and an alkyl ester group having 1 to 30 carbon atoms. This is speculated to be because when a relatively soft structure is selected, flexibility of the ink film obtained after the ink has been fixed onto the recording medium is enhanced, and the durability of recorded images is enhanced.

Furthermore, m represents an integer, and may be appropriately selected in the range that satisfies the molecular weight that will be described below.

Furthermore, according to the present invention, the polymer particles are preferably polyurethane particles having a polyurethane structure formed from a diisocyanate and a diol, from the viewpoint of scratch resistance, and when the viewpoints of the storage stability and the jetting stability of the ink are considered, the polymer particles are more preferably polyurethane particles having a polyurethane structure formed from a diisocyanate and a polycarbonate diol.

Polyurethane particles may be any of particles having a crosslinked structure in the interior or particles having no crosslinked structure; however, from the viewpoint of image fixability, polyurethane particles having no crosslinked structure are more preferred.

According to the present invention, commercially available products may be used as the polymer particles, and examples of commercially available polyurethane-based products include ACRIT WBR-016U (Tg: 20°C), ACRIT WEM-321U (Tg: 20°C), ACRIT WBR-2018 (Tg: 20°C), ACRIT WBR-2000U (Tg: 45°C), and ACRIT WBR-601U (Tg: -30°C) manufactured by Taisei Fine Chemical Co., Ltd.; PUE-1000, PUE-1020A, PUE-1370, and PUE-800 manufactured by Murayama Chemical Laboratory Co., Ltd.; SUPERFLEX 650, SUPERFLEX 860, and SUPERFLEX 210 manufactured by DKS Co., Ltd.; NEOTAN UE-1100 manufactured by Toagosei Co., Ltd.; UCOAT UX-150, UCOAT UWS-145, PERMARIN UA-150, PERMARIN UA-368, and UPRENE UXA-307 manufactured by Sanyo Chemical Industries, Ltd.; IMPRANIL DLP-R (Tg: 21°C), IMPRANIL DLN (Tg: -55°C), IMPRANIL DLC-F (Tg: -42°C), BAYHYDROL (UH XP2648 (Tg: -51°C), and DISPERCOLL U-53 (Tg: -58°C) manufactured by Sumika Bayer Urethane Co, Ltd.; PERMARIN UA-150 (Tg: 36°C) manufactured by Sanyo Chemical Industries, Ltd.; and UW-1005-E (Tg: -30°C) and UW-5101-E (Tg: 69°C) manufactured by Ube Industries, Ltd. (all trade names).

Regarding the polymer particles, particles formed from an acrylic resin having a (meth)acrylic structure, that is, particles of an acrylic resin, are also suitable.

As the acrylic resin, a resin having anionic groups is preferred. Such an acrylic resin is obtained by, for example, polymerizing an acrylic monomer having an anionic group (anionic group-containing acrylic monomer), optionally with another monomer which can be copolymerized with this anionic group-containing acrylic monomer, in a solvent. The anionic group-containing acrylic monomer may be, for example, an acrylic monomer having one or more groups selected from a carboxyl group, a sulfonic acid group, and a phosphonic acid group. Above all, acrylic monomers each having a carboxyl group (for example, acrylic acid, methacrylic acid, crotonic acid, ethacrylic acid, propylacrylic acid, isopropylacrylic acid, itaconic acid, and fumaric acid) are preferred, and acrylic acid or methacrylic acid is particularly preferred.

Regarding the particles of an acrylic resin, commercially available products that are sold in the market may also be used, and examples of commercially available products include ARON HD-5 (trade name, Tg: 45°C, acrylic) manufactured by Toagosei Co., Ltd.; and MOWINYL 742N (trade name, Tg: 37°C, acrylic) manufactured by Nippon Synthetic Chemical Industry Co., Ltd.

Regarding the polymer particles, particles formed from a styrene-based resin having a styrene structure, that is, particles of a styrene-based resin, are also suitable.

Examples of the styrene-based resin include homopolymers of styrene as well as copolymers of styrene and other monomers such as acrylic monomers. Examples of the acrylic monomers include the same anionic group-containing acrylic monomers as those for the acrylic resin described above.

As the particles of a styrene-based resin, commercially available products that are sold in the market may be used, and examples of the commercially available products include JONCRYL 741 (trade name, Tg: 15°C, styrene/acrylic resin), JONCRYL 775 (trade name, Tg: 37°C, styrene/acrylic resin), JONCRYL 537 (trade name, Tg: 49°C, styrene/acrylic resin), and JONCRYL 538 (trade name, Tg: 66°C, styrene/acrylic resin) manufactured by Johnson Polymers, Ltd.

The molecular weight of the polymer particles is, as the weight average molecular weight, preferably in the range of 3,000 to 300,000, and more preferably in the range of 5,000 to 200,000. The weight average molecular weight is a value measured using gel permeation chromatography (GPC) and calculated relative to polystyrene standards. The measurement conditions are as follows.

### <Conditions>

- GPC: HLC-8220 GPC (trade name, manufactured by Tosoh Corp.)
- Column: TSKgel SuperHZM-H, TSKgel SuperHZ4000, and TSKgel SuperHZ2000
(all trade names, manufactured by Tosoh Corp.)
- Mobile phase solvent: tetrahydrofuran
- Standard sample: polystyrene standards
- Flow rate: 0.35 ml/min
- Column temperature: 40°C

The method for producing the water-insoluble polymer that constitutes the polymer particles is not particularly limited. Examples thereof include a method of performing emulsion polymerization in the presence of a polymerizable surfactant, and covalently bonding the surfactant with the water-insoluble polymer; and a method of copolymerizing a monomer mixture including a hydrophilic group-containing monomer and an aromatic group-containing monomer by a known polymerization method such as a solution polymerization method or a bulk polymerization method. Among the polymerization methods, a solution polymerization method is preferred from the viewpoint of landing stability when the polymer is prepared into ink, and a solution polymerization method using an organic solvent is more preferred.

The polymer particles contain a polymer synthesized in an organic solvent, and this polymer is a polymer having carboxyl groups, and preferably having an acid value of 1 to 50, and a polymer prepared as a polymer dispersion having a portion or all of the carboxyl groups of this polymer neutralized and having water as a continuous phase. Such polymer particles are described in detail in the specification of JP2012-200968, which has been previously filed by the applicant of the present application, and these can also be applied to the present invention.

The average particle size of the polymer particles (particularly, self-dispersing polymer particles) is, as the volume average particle size, preferably in the range of 10 nm to 400 nm, more preferably in the range of 10 nm to 200 nm, even more preferably in the range of 10 nm to 100 nm, and particularly preferably in the range of 10 nm to 50 nm. When the average particle size is 10 nm or more, production suitability is enhanced. Furthermore, when the average particle size is 400 nm or less, storage stability is enhanced. There are no particular limitations on the particle size distribution of the polymer particles, and any of polymer particles having a broad particle size distribution or polymer particles having a monodispersed particle size distribution may be used. Furthermore, two or more kinds of water-insoluble particles may be used in mixture.

Meanwhile, the average particle size and the particle size distribution of the polymer particles can be determined by measuring the volume average particle size by a dynamic light scattering method using a NanoTrac particle size distribution analyzer (manufactured by Nikkiso Co., Ltd., trade name: UPA-EX150).

From the viewpoint of the storage stability of the ink, the glass transition temperature (Tg) of the polymer particles is preferably in the range of -60°C to 70°C, more preferably in the range of -40°C to 70°C, and even more preferably in the range of 20°C to 50°C.

When the glass transition temperature of the polymer particles is within the range described above, hardness or stickiness does not easily occur in the image, the texture such as the feel of touch (for example, there is no hardness or stickiness in the recorded image) becomes satisfactory, and the scratch resistance of the recorded image can be further enhanced.

The polymer particles (particularly, self-dispersing polymer particles) can be used singly or as mixtures of two or more kinds thereof. Two or more kinds of polymer particles may be included, or particles composed of two or more kinds of polymers mixed or bonded together may also be used.

When polymer particles are incorporated into the ink composition of the present invention, the content of the polymer particles in the ink composition is preferably 1% by mass to 30% by mass, and more preferably 5% by mass to 15% by mass, relative to the total amount of the ink, from the viewpoint of the scratch resistance of images.

### <Colorant>

The ink composition related to the present invention may include a colorant. When the ink composition includes a colorant, the ink composition becomes a colored ink composition. Regarding the colorant, a pigment, a dye and the like are suitable, and among them, a pigment is preferred from the viewpoint of the light resistance of images. The pigment is not particularly limited and can be appropriately selected according to the purpose, and for example, the pigment may be any of an organic pigment or an inorganic pigment. From the viewpoint of ink colorability, it is preferable that the pigment is mostly insoluble or sparingly soluble in water.

Examples of the organic pigment include polycyclic pigments such as azo lakes, azo pigments, phthalocyanine pigments, perylene pigments, perinone pigments, anthraquinone pigments, quinacridone pigments, dioxazine pigments, diketopyrrolopyrrole pigments, thioindigo pigments, isoindolinone pigments, and quinophthalone pigments; dye lakes such as basic dye type lakes and acidic dye type lakes; nitro pigments, nitroso pigments, aniline black, and daylight fluorescent pigments.

Furthermore, examples of the inorganic pigment include titanium oxide, iron oxide-based pigments, and carbon black-based pigments.

In the ink composition of the present invention, even pigments that are not described in the Color Index can all be used as long as the pigments can be dispersed in an aqueous phase. A pigment that has been surface-treated with a surfactant, a polymeric dispersant or the like, or graft carbon and the like can also be used.

For the ink composition of the present invention, among the pigments described above, azo pigments, phthalocyanine pigments, anthraquinone pigments, quinacridone pigments, and carbon black-based pigments are particularly preferred.

The ink composition of the present invention may include a water-dispersible pigment as a colorant.

Specific examples of the water-dispersible pigment include pigments of the following (1) to (4).
(1) Encapsulated pigment: A polymer dispersion obtained by incorporating a pigment into polymer particles; more particularly, a pigment which has been made dispersible in water by coating the pigment with a hydrophilic water-insoluble resin, and hydrophilizing the pigment at the resin layer on the pigment surface.
(2) Self-dispersing pigment: A pigment which has at least one hydrophilic group on the surface and exhibits at least any one of water-dispersibility and water-solubility in the absence of dispersants; more particularly, a simple pigment substance dispersed in water by hydrophilizing mainly carbon black or the like by a surface oxidation treatment.
(3) Resin-dispersed pigment: A pigment dispersed by a water-soluble polymer compound having a weight average molecular weight of 50,000 or less.
(4) Surfactant-dispersed pigment: A pigment dispersed by a surfactant.

An encapsulated pigment can be produced by, for example, the methods described in JP1997-151342A (JP-H09-151342A), JP1998-140065A (JP-H10-140065A), JP1999-209672A (JP-H11-209672A), JP1999-172180A (JP-H11-172180A), JP1998-25440A (JP-H10-25440A), or JP1999-43636A (JP-H11-43636).

Furthermore, a self-dispersing pigment is also one of the preferred examples. A self-dispersing pigment is a pigment in which a number of hydrophilic functional groups and/or salts thereof (hereinafter, referred to as "dispersibility-imparting groups") are bonded to the pigment surface directly or indirectly via an alkyl group, an alkyl ether group, an aryl group or the like, and is a pigment which can be dispersed in an aqueous medium without using a dispersant for pigment dispersion. Here, "being dispersed in an aqueous medium without using a dispersant" implies that the pigment can be dispersed in an aqueous medium even if a dispersant for dispersing the pigment is not used.

Regarding the self-dispersing pigment, commercially available products may be used, and specific examples include MICROJET CW-1 (trade name, manufactured by Orient Chemical Industries Co., Ltd.), CAB-O-JET 200, and CAB-O-JET 300 (trade name, manufactured by Cabot Corporation.).

### - Dispersant -

In a case in which a pigment is used as a colorant in the ink composition of the present invention, a dispersant may be used. Examples of the dispersant include polymeric dispersants and low molecular weight surfactant type dispersants, and in the ink composition of the present invention, any one of these may be used. Also, regarding the polymeric dispersant, any of water-soluble or non-water-soluble dispersants may be used.

Meanwhile, the term "non-water-soluble" means that when a dispersant is dried for 2 hours at 105°C and then dissolved in 100 g of water at 25°C, the amount of dissolution of the dispersant is 10 g or less.

A low molecular weight surfactant type dispersant can stably disperse a pigment in an aqueous solvent while maintaining the ink at a low viscosity. A low molecular weight surfactant type dispersant refers to a low molecular weight dispersant having a molecular weight of 2,000 or less. The molecular weight of the low molecular weight surfactant type dispersant is preferably in the range of 100 to 2,000, and more preferably in the range of 200 to 2,000.

A low molecular weight surfactant type dispersant has a structure containing a hydrophilic group and a hydrophobic group. The hydrophilic group and the hydrophobic group are each independent such that one or more groups may be included in one molecule, and it is also acceptable for a dispersant to have plural kinds of hydrophilic groups and hydrophobic groups. The dispersant compound may also appropriately have a linking group for linking a hydrophilic group and a hydrophobic group.

### Examples of the hydrophilic group include an anionic group, a cationic group, a nonionic group, and a betaine type combining these.

The hydrophobic group has a hydrocarbon-based, fluorocarbon-based or silicone-based structure, or the like, and a hydrophobic group having a hydrocarbon-based structure is particularly preferred. Furthermore, the hydrophobic group may have any one of a straight chain-like structure or a branched structure. The hydrophobic group may have a single-chain-like structure or a chain-like structure having two or more chains, and in the case of a chain-like structure having two or more chains, the dispersant may have plural kinds of hydrophobic groups.

The hydrophobic group is preferably a hydrocarbon group having 2 to 24 carbon atoms, more preferably a hydrocarbon group having 4 to 24 carbon atoms, and even more preferably a hydrocarbon group having 6 to 20 carbon atoms.

Among the polymeric dispersants, examples of the water-soluble dispersant include hydrophilic polymer compounds.

Among the polymeric dispersants, polymer compounds containing carboxyl groups are preferred from the viewpoint of the dispersion stability of the pigment, and for example, polymer compounds containing carboxyl groups, such as an acrylic resin such as a water-soluble styrene-acrylic resin; a water-soluble styrene-maleic acid resin, a water-soluble vinylnaphthalene-acrylic resin, and a water-soluble vinylnaphthalene-maleic acid resin, are particularly preferred.

The weight average molecular weight of the polymeric dispersant is preferably in the range of 3,000 to 200,000, more preferably in the range of 5,000 to 100,000, even more preferably in the range of 5,000 to 80,000, and particularly preferably in the range of 10,000 to 60,000.

From the viewpoint of self-dispersibility, it is preferable that the polymeric dispersant contains a polymer having a carboxyl group, and the polymeric dispersant is preferably a polymer having a carboxyl group and an acid value of 100 mg KOH/g or less, and more preferably a polymer having a carboxyl group and an acid value of 25 mg KOH/g to 100 mg KOH/g.

The mixing mass ratio between the pigment and the dispersant (pigment: dispersant) is preferably in the range of 1:0.06 to 1:3, more preferably in the range of 1:0.125 to 1:2, and even more preferably in the range of 1:0.125 to 1:1.5.

Furthermore, in regard to the ink composition of the present invention, a resin-coated pigment in which at least a portion of the surface of a pigment is coated with a crosslinked polymer obtained by crosslinking a water-soluble resin with a crosslinking agent, is more preferred. The water-soluble resin acts as a dispersant which disperses a pigment. If the pigment is coated with a crosslinked polymer, when the pigment is prepared into a pigment dispersion, or a water-based ink is prepared using this pigment dispersion, excellent stability (stability against pH fluctuations and stability against temperature fluctuations) can be imparted. Examples of the water-soluble resin include polyvinyls, polyurethanes, and polyesters, and among them, polyvinyls are preferred.

The water-soluble resin as used herein has, in the molecule, a group which causes a crosslinking reaction from a crosslinking agent. Such a group is not particularly limited; however, examples thereof include a carboxyl group or a salt thereof, an isocyanate group, and an epoxy group. In regard to the ink composition of the present invention, it is preferable that the water-soluble resin has a carboxyl group or a salt thereof, from the viewpoint of enhancing dispersibility.

It is preferable that the water-soluble resin is a copolymer which is obtainable using a carboxyl group-containing monomer as a copolymerization component.

The acid value of the water-soluble resin (number of mg of KOH required to neutralize 1 g of the water-soluble resin) is preferably 135 mg KOH/g to 250 mg KOH/g, more preferably 135 mg KOH/g to 200 mg KOH/g, and particularly preferably 135 mg KOH/g to 180 mg KOH/g, from the viewpoints of the dispersibility of the pigment and the dispersion stability.

The amount of the water-soluble resin with respect to the pigment is preferably 10% by mass to 250% by mass, more preferably 10% by mass to 200% by mass, even more preferably 20% by mass to 150% by mass, and particularly preferably 30% by mass to 100% by mass.

The resin-coated pigment in which the surface of a pigment is coated with a crosslinked polymer obtained by crosslinking a water-soluble resin with a crosslinking agent, is obtained through a process of dispersing the pigment using a water-soluble resin, and then crosslinking the water-soluble resin with a crosslinking agent.

Regarding the pigment coated with a crosslinked polymer obtained by crosslinking a water-soluble resin with a crosslinking agent, specifically, Projet Yellow APD1000, Projet Magenta APD1000, Projet Cyan APD1000, and Projet Black APD1000 (trade names, all manufactured by Fujifilm Imaging Colorants Limited.), and the like are suitably used.

In the ink composition of the present invention, a dye may also be used as a colorant, instead of a pigment. In the case of using a dye, a dye held on a water-insoluble carrier can be used. Regarding the dye, any known dye can be used without limitations, and for example, the dyes described in JP2001-115066A, JP2001-335714A, JP2002-249677A, and the like are suitably used. The carrier is not particularly limited as long as the carrier is insoluble or sparingly soluble in water, and the carrier can be selected from inorganic materials, organic materials, and composite materials thereof and used. Specifically, the carriers described in JP2001-181549A, JP2007-169418A, and the like are suitably used.

The carrier holding the dye (water-insoluble colored particles) can be used as a water-based dispersion using a dispersant. As the dispersant, the dispersant described above can be suitably used.

In regard to the ink composition of the present invention, from the viewpoints of scratch resistance, quality and the like of images, it is preferable that the ink composition includes a pigment and a dispersant, and it is more preferable that the ink composition includes an organic pigment and a polymeric dispersant, and the organic pigment is incorporated as a water-dispersible pigment in which at least a portion of the surface of the pigment is coated with the polymeric dispersant.

Furthermore, in the ink composition of the present invention, it is particularly preferable that the ink composition includes an organic pigment and a polymeric dispersant containing a carboxyl group, and the organic pigment is incorporated as a water-dispersible pigment in which at least a portion of the pigment surface is coated with a polymeric dispersant having a carboxyl group.

The average particle size of the pigment in a dispersed state is preferably 10 nm to 200 nm, more preferably 10 nm to 150 nm, and even more preferably 10 nm to 100 nm. When the average particle size is 200 nm or less, satisfactory color reproducibility is obtained, and the droplet impact characteristics at the time of droplet impact also become satisfactory. When the average particle size is 10 nm or more, satisfactory light resistance is obtained. The particle size distribution of the color material is not particularly limited, and the particle size distribution may be any of a broad particle size distribution or a monodispersed particle size distribution. Furthermore, it is also acceptable to use a mixture of two or more kinds of color materials each having a monodispersed particle size distribution.

Here, the average particle size of the pigment in a dispersed state represents the average particle size in a state of being prepared into ink; however, the same also applies to the so-called concentrated ink dispersion used in the stage previous to the preparation of ink.

Meanwhile, the average particle size of the pigment in a dispersed state, and the average particle size and the particle size distribution of the polymer particles that will be described below can be determined by measuring the volume average particle size by a dynamic light scattering method using a NanoTrac particle size distribution analyzer UPA-EX150 (trade name, manufactured by Nikkiso Co., Ltd.).

The pigment may be used singly or in combination of two or more kinds thereof.

When the ink composition of the present invention includes a pigment, the content of this pigment in the ink composition is preferably 1% by mass to 25% by mass, and more preferably 2% by mass to 15% by mass, relative to the total amount of the ink composition, from the viewpoint of the image density.

### <Other additives>

The ink composition related to the present invention may include other additives as necessary, in addition to the components described above. Examples of the other additives include known additives such as a fading inhibitor, an emulsion stabilizer, a penetration enhancer, an ultraviolet absorber, an antiseptic agent, an antifungal agent, a pH adjusting agent, a viscosity adjusting agent, a dispersant, a dispersion stabilizer, a water-repellent, and a chelating agent. These various additives may be added directly after the ink composition is prepared, or may be added at the time of preparing the ink composition.

Meanwhile, it is preferable that the ink composition of the present invention does not include a surfactant having a HLB that is not in the range of the particular surfactant having an anti-foaming function, or a known anti-foaming agent, since there is a risk that these agents may affect ink jettability.

An ultraviolet absorber can enhance the preservability of images. Regarding the ultraviolet absorber, the benzotriazole-based compounds described in JP1983-185677A (JP-S58-185677A), JP1986-190537A (JP-S61-190537A), JP1990-782A (JP-H02-782A), JP1993-197075A (JP-H05-197075A), JP1997-34057A (JP-H09-34057A), and the like; the benzophenone-based compounds described in JP1971-2784A (JP-S46-2784A), JP1993-194483A (JP-H05-194483A), US3214463A, and the like; the cinnamic acid-based compounds described in JP1973-30492A (JP-S48-30492A), JP1981-21141A (JP-S56-21141A), JP1998-88106A (JP-H10-88106A), and the like; the triazine-based compounds described in JP1992-298503A (JP-H04-298503A), JP1996-53427A (JP-H08-53427A), JP1996-239368A (JP-H08-239368A), JP1998-182621A (JP-H10-182621A), JP1996-501291A (JP-H08-501291A), and the like; the compounds described in Research Disclosure No. 24239; and compounds that absorb ultraviolet radiation and emit fluorescence, as represented by stilbene-based and benzoxazole-based compounds, which are so-called fluorescent brightening agents, can also be used.

A fading inhibitor can enhance the preservability of images. Regarding the fading inhibitor, various organic and metal complex-based fading inhibitors can be used. Examples of the organic fading inhibitors include hydroquinones, alkoxyphenols, dialkoxyphenols, phenols, anilines, amines, indanes, chromanes, alkoxyanilines, and heterocyclic rings, while examples of the metal complexes include nickel complexes and zinc complexes. More specifically, the compounds described in the patents cited in Research Disclosure No. 17643, VII, paragraphs I to J; Research Disclosure No. 15162; Research Disclosure No. 18716, p. 650, left column; Research Disclosure No. 36544, p. 527; Research Disclosure No. 307105, p. 872; and Research Disclosure No. 15162, and the compounds included in the general formula and compound examples of the representative compound described in JP1987-215272A (JPS62-215272A), pp. 127-137, can be used.

Examples of the antifungal agent include sodium dehydroacetate, sodium benzoate, sodium pyridinethione-1-oxide, p-hydroxybenzoic acid ethyl ester, 1,2-benzisothiazolin-3-one, and salts thereof. It is preferable to use these agents in an amount of 0.02% to 1.00% by mass in the ink composition.

As the pH adjusting agent, a neutralizing agent (an organic base or an inorganic alkali) can be used. From the viewpoint of enhancing the storage stability of the ink composition, it is preferable to add the pH adjusting agent such that the pH of the ink composition reaches a pH of 6 to 10, and more preferably a pH 7 to 10.

### <Physical properties of ink composition>

### (Viscosity)

The ink composition that can be applied to the image forming method of the present invention needs to have the viscosity at 30°C in the range of 10 mPa·s to 14 mPa·s, and it is more preferable that the viscosity is in the range of 11 mPa·s to 13 mPa·s.

When the viscosity of the ink composition is in the range described above, the image forming method can be suitably used as an image forming method for forming an image by jetting an ink composition as liquid droplets each having a volume of 60 pL to 120 pL, onto a recording medium using an inkjet head, that is, an image forming method using an inkjet recording apparatus having an inkjet head which can jet liquid droplets each having a volume of 60 pL to 120 pL.

The viscosity of the ink composition is adjusted by controlling the kind and content of the water-soluble polymer or the water-soluble organic solvent.

The viscosity of the ink composition according to the present invention is a value measured using an ink composition whose temperature has been adjusted to 30°C as an object of measurement, using a vibration type viscometer (manufactured by Brookfield Engineering Laboratories, Inc., trade name: DV-II+VISCOMETER) in an environment at 30°C and a relative humidity of 50%, by using the ink in the form of a stock solution at 30°C and using a cone-plate (φ 35 mm), and the average value of data obtained at a torque in the range of 20% to 90% and a speed of rotation in the range of 0.5 rpm to 100 rpm was defined as the measured value of viscosity.

### (Surface tension)

The surface tension of the ink composition is preferably in the range of 20 mN/m to 40 mN/m, more preferably in the range of 30 mN/m to 38 mN/m, and particularly preferably in the range of 35 mN/m to 37 mN/m. For the surface tension of the ink composition, a value measured by a plate method using an automatic surface tensiometer, CBVP-Z (trade name, manufactured by Kyowa Interface Science Co., Ltd.), under the temperature conditions of 25°C, is used.

The surface tension of the ink composition is adjusted by the kind or the amount of addition of the particular surfactant; however, if necessary, the surface tension may also be adjusted by adding other surfactants.

### [Image forming method]

The image forming method of the present invention is a method for forming an image by jetting an ink composition onto a recording medium using an inkjet head which is capable of jetting the ink composition as liquid droplets each having a volume of 60 pL to 120 pL.

Application of the ink composition onto a recording medium may be carried out using inkjet recording apparatus equipped with an inkjet head which is capable of jetting the ink composition as liquid droplets each having 60 pL to 120 pL.

Since an ink composition having a viscosity in the above-mentioned range can be jetted as large liquid droplets without causing defective jetting, according to the image forming method of the present invention, an image recorded material having a high-quality image can be obtained with high productivity, at a high frequency while the recording medium is conveyed at a speed higher than the conventional speed, even if ink is jetted as relatively large liquid droplets.

The image forming method of the present invention may further include, after the ink composition is applied onto the recording medium, an ink drying step in which the solvent (specifically, at least any one of water and a water-soluble organic solvent) in the ink composition that has been applied onto the recording medium is reduced by drying.

### (Application of ink composition)

The application of an ink composition onto a recording medium according to the image forming method of the present invention will be explained.

In the ink application step according to the present invention, the ink composition described above is applied onto a recording medium by an inkjet method.

According to the image forming method of the present invention, the aforementioned inkjet recording apparatus for applying an ink composition onto a recording medium is not particularly limited, except that the inkjet recording apparatus includes an inkjet head which is capable of jetting the ink composition as liquid droplets each having a volume of 60 pL to 120 pL, and any known inkjet recording apparatus equipped with a head which can jet liquid droplets in the previously described amount can be arbitrarily selected and used.

In the image forming method of the present invention, in order to use a water-based ink composition, it is preferable that at least the surface of the nozzle unit of the inkjet head is formed to contain at least one material selected from metals or compounds containing silicon, from the viewpoint of enhancing the durability of the head or suppressing defective jetting.

Examples of the material selected from the group consisting of metals and compounds containing silicon include metals such as copper, silver, palladium, nickel, and gold; alloys such as a nickel/gold alloy, stainless steel, and brass; metal oxides such as titanium oxide; silicon, silicon having an oxide coating on the surface, and silicon having a fluorine-treated surface.

In a case in which ink is applied onto a recording medium by an inkjet recording method, the application mode may be a multi-pass mode or a single pass mode; however, from the viewpoint of high-speed recording, single pass or double pass is preferred.

Here, single pass means a recording method of performing recording by forming all of the dots (ink droplets) to be formed in the scan region in a direction that intersects the conveyance direction of the recording medium (direction of arrangement of recording elements) by a single jetting. In this case, a jet head (a line head in which recording elements are arranged) having a length equivalent to the length of the recording medium width is provided in the width direction of the recording medium, which intersects the conveyance direction of the recording medium that is conveyed at the time of recording, and ink is jetted simultaneously through plural jet orifices provided in the jet head, toward the main scanning direction. This is referred to as a so-called line mode, and recording of an image can be carried out over the entire surface of a recording medium by scanning the recording medium in a direction that intersects the direction of arrangement of recording elements (main scanning direction). Therefore, unlike the shuttle mode of performing recording while scanning a serial head having a short length in the width direction of the recording substrate (main scanning direction), a conveyance system such as a carriage is unnecessary.

Also, double pass is a method of performing recording by forming dots that are formed in the scan region, by two jettings.

The amount of ink droplets to be applied onto a recording substrate is not particularly limited as long as the amount is in a range by which the desired image quality, scratch resistance, and the feel of the image area can be satisfied. However, from the viewpoint of enabling high-speed printing, according to the present invention, an amount in the range of 60 pl to 120 pl is selected, and an amount in the range of 70 pl to 110 pl is preferred, while an amount in the range of 70 pl to 100 pl is more preferred.

When the amount of ink droplets is 60 pl or more, the ink region after fixation is secured and is therefore not easily peeled off, and scratch resistance of the image can be further increased. Furthermore, when the amount of ink droplets is 120 pl or less, drying of the liquid droplets on the recording medium surface can be maintained satisfactorily, and the occurrence of image blurring is prevented.

Furthermore, the diameter of an ink droplet (diameter before landing) that is applied onto a recording substrate is preferably 48 µm to 61 µm, and more preferably 51 µm to 59 µm. Meanwhile, the diameter of an ink droplet can be directly measured by an observation of liquid droplets using a high-speed camera (for example, HYPER VISION HPV-2A (trade name) manufactured by Shimadzu Corp.).

The viscosity (30°C) of the water-based ink is in the range of 10 mPa·s to 14 mPa·s as described previously, and is preferably in the range of 11 mPa·s to 13 mPa·s, from the viewpoint of stably supplying ink from an ink tank to the recording head.

For example, the resolution for each color is preferably 100 dpi (dots per inch) or more, and from the viewpoint of high image quality, the resolution is preferably 200 dpi or more.

Examples of such an inkjet head that may be suitably used in the present invention include SAPPHIRE QS256/10, SAPPHIRE QS256/30, SAPPHIRE QS256/80, EMERALD QE256/30, EMERALD QE256/80, GALAXY 256/30, GALAXY 256/50, GALAXY 256/80, POLARIS 512/15, POLARIS 512/35, POLARIS 512/85, and SG-1024 (all trade names, manufactured by Fujifilm Dimatix, Inc.).

### - Recording medium -

According to the present invention, the recording medium is not particularly limited, and any recording medium known as a support or a recording material can be used. Examples of the recording medium include paper, glass, plates of metals (for example, aluminum, zinc, and copper), films or sheets of plastics (for example, a polyvinyl chloride resin, cellulose diacetate, cellulose triacetate, cellulose propionate, cellulose butyrate, cellulose acetate butyrate, cellulose nitrate, polyethylene terephthalate, polyethylene, polystyrene, polypropylene, polycarbonate, and polyvinyl acetal), paper having the aforementioned plastics laminated thereon, and paper or plastic films having the aforementioned metals laminated or deposited thereon.

When the ink composition of the present invention is used, images having excellent scratch resistance and flexibility can be recorded, a recording medium that is non-absorbent or low-absorbent for the ink is preferred from the viewpoint that the effects of the present invention are more advantageously provided. From such a viewpoint, among the recording media described above, the recording medium according to the present invention is preferably a plastic film or sheet, and also from the viewpoint of general-purpose usability, films or sheets of polypropylene, polyethylene, polyethylene terephthalate, and a polyvinyl chloride resin are more preferred.

Non-absorbency or low-absorbency indicates the degree of absorption of an ink against a recording medium; however, since the ink composition of the present invention is water-based, non-absorbency or low-absorbency can be evaluated based on the absorbency for water as described below. That is, according to the present invention, a "non-absorbent recording medium" means a recording medium having a constitution with a coefficient of water absorption (mass%, 24 hr) of less than 0.2 according to ASTM D570 of ASTM test methods, and a "low-absorbent recording medium" means a recording medium having a constitution with a coefficient of water absorption (mass%, 24 hr) of 0.2 or more but less than 0.5 according to ATM D570 of ASTM test methods.

The thickness of the recording medium is preferably 0.1 µm to 1,000 µm, more preferably 0.1 µm to 800 µm, and even more preferably 1 µm to 500 µm. When the thickness of the recording medium is in the range of 0.1 µm to 1,000 µm, the effects of the present invention that images having excellent flexibility can be recorded are provided more advantageously.

The recording medium may be subjected to a hydrophilization treatment. When a recording medium in a state before ink is applied thereto is subjected to a hydrophilization treatment, cissing of the ink that has been prepared into a water-based ink can be prevented, and the scratch resistance of images can be further enhanced.

Examples of the hydrophilization treatment include, but are not limited to, a corona treatment, a plasma treatment, a flame treatment, a heat treatment, an abrasion treatment, a light irradiation treatment (UV treatment), and a flame treatment. For example, when the surface of a recording medium is subjected to a corona treatment in advance before an image is recorded by applying an ink, the surface energy of the recording medium increases, and wetting of the surface of the recording medium and the adhesion of the ink to the recording medium are promoted. A corona treatment can be carried out using, for example, a corona master (manufactured by Shinko Electric & Instrumentation Co., Ltd., trade name: PS-10S) or the like. The conditions for the corona treatment may be appropriately selected as applicable, depending on the kind of the recording medium, the composition of the ink, and the like. For example, treatment conditions described below may be used.
- Treatment voltage: 10 to 15.6 kV
- Treatment speed: 30 to 100 mm/s
Regarding the hydrophilization treatment according to the present invention, an embodiment of applying a corona treatment is preferred in view of cost and workability.

### (Drying of ink composition)

The image forming method of the present invention may further include an ink drying step after an image is formed by applying an ink composition.

When an ink drying step is adopted, the liquid medium (water and a water-soluble organic solvent) in the ink composition is evaporated, and a high-quality image with reduced unevenness or blurring of image, and a recorded material having excellent scratch resistance can be obtained in a short period of time. Furthermore, when an ink drying step is adopted, wrinkles or curling of the recording medium can be prevented. Furthermore, when an ink drying step is adopted, for example, in the case of using an ink composition including polymer particles, fusion of the polymer particles included in the ink composition is promoted by heating at the time of drying, and a satisfactory coating is formed. Therefore, the scratch resistance of images is further enhanced.

The drying temperature is preferably 20°C or higher, from the viewpoint that the liquid medium present in the ink composition can be evaporated, and a coating film based on polymer particles is formed. Above all, the drying temperature is preferably 20°C to 150°C, and more preferably 40°C to 80°C. When the drying temperature is 80°C or lower, anti-formation of the recording medium can be prevented.

Meanwhile, the drying time is not particularly limited as long as the liquid medium in the ink composition can be evaporated, and a coating film based on polymer particles can be formed. The drying time can be appropriately selected in consideration of the kind of the liquid medium, the kind of the polymer, the recording speed, and the like.

The drying mode is not particularly limited as long as a method of accelerating the volatilization of the liquid medium included in the ink composition is used. Examples of the drying mode include a method of applying heat to the recording medium before and after recording, a method of blowing air to the recording medium after recording, and a method of combining these. Specific examples include forced air heating, radiation heating, conduction heating, high frequency drying, microwave drying, and dry air blowing.

### [Image recorded material]

The image recorded material of the present invention has an image recorded according to the image forming method of the present invention.

The image recorded material of the present invention has a high-quality image having excellent dryability with suppressed occurrence of unevenness or streaks. Furthermore, since such an image recorded material is obtained with high productivity by high-speed printing, for example, the image recorded material can be suitably used as relatively inexpensive mass-produced goods on which it is necessary to form an image in a large area in a large quantity, for example, packaging materials for foods and daily goods, and carrier bags made of paper or plastic films.

### EXAMPLES

Hereinafter, the present invention will be explained more specifically by way of Examples; however, the present invention is not intended to be limited to the following Examples as long as the gist is maintained. Meanwhile, unless particularly stated otherwise, the unit "percent (%)" is on a mass basis.

### [Example 1]

A magenta (M) ink composition was prepared by the method disclosed below, according to the formulation of Ink Composition 1 described below.

A desired ink composition was prepared by adding a solution of a water-soluble organic solvent, a water-soluble polymer, a surfactant and water to a pigment dispersion liquid that was being stirred, subsequently adding polymer microparticles thereto, and stirring the mixture for 30 minutes.

### (Ink Composition 1)

- Projet magenta APD1000 (trade name, manufactured by Fujifilm Imaging Colorants limited., magenta pigment dispersion liquid, pigment concentration: 14%) ··· 28.57 parts by mass
- 2-Pyrrolidone (manufactured by Tokyo Chemical Industry Co., Ltd.; water-soluble organic solvent, SP value: 29.12) ··· 16 parts by mass
- Polyethylene glycol 8000* (manufactured by MP Biomedicals, LLC; water-soluble polymer, Mn: 8000, SP value: 20.62) ··· 8.1 parts by mass

### * indicated as "PEG8000" in Tables 1 and 2

- SURFYNOL 104PG50 (trade name, manufactured by Air Products and Chemicals, Inc., number average molecular weight: 226.36, HLB: 4) ··· 0.41 parts by mass
- Polyurethane microparticles (trade name: WBR-2101, manufactured by Taisei Fine Chemical Co., Ltd., Tg: 40°C, 30% by mass) ··· 17 parts by mass
- Ion-exchanged water ··· balance (parts by mass) to make up the total amount of ink to 100 parts by mass

In the following Tables 1 and 2, the water-soluble polymer and the water-soluble organic solvent used in the ink composition and SP values thereof, the difference between the SP value of the water-soluble polymer and the SP value of the water-soluble organic solvent (ΔSP value), and the HLB of the surfactant used are described.

The viscosity at 30°C of the ink composition thus obtained, and the surface tension were measured by the methods described below, and the results are described together in Tables 1 and 2.

### (Viscosity)

The ink composition whose temperature was adjusted to 30°C was used as an object of measurement, and viscosity was measured using a vibration type viscometer (manufactured by Brookfield Engineering Laboratories, Inc., trade name: DV-II+VISCOMETER) in an environment at 30°C and a relative humidity of 50%, by using the ink in the form of a stock solution at 30°C and using a cone-plate (φ 35 mm). The average value of data obtained at a torque in the range of 20% to 90% and a speed of rotation in the range of 0.5 rpm to 100 rpm was defined as the measured value of viscosity.

### (Surface tension)

The surface tension of the ink composition was measured using an automatic surface tensiometer, CBVP-Z (trade name, manufactured by Kyowa Interface Science Co., Ltd.) by a plate method under the temperature conditions of 25°C.

### <Evaluation>

Image formation was performed by jetting the ink composition related to Example 1 thus obtained, using an inkjet recording apparatus, POLARIS head (trade name, manufactured by Fujifilm Dimatix, Inc.) equipped with an inkjet head which was capable of jetting the ink composition in an amount of liquid droplets of 85 pl, and the images were evaluated according to the following criteria.

The evaluation results are presented in the following Tables 1 and 2.

### 1. Continuous jettability

The aforementioned ink was continuously jetted through all of the nozzles of 256 ch of a POLARIS head (trade name, manufactured by Fujifilm Dimatix, Inc.) at a frequency of 10 kHz. For this continuous jetting, the amount of liquid droplets of the ink was set to 85 pL. The number of remaining nozzles that could jet without causing jetting failure after 20 minutes from the initiation of continuous jetting, was counted by strobe photography.

The proportion of the number of remaining nozzles with respect to the total number of nozzles was determined based on the measurement results, and the continuous jettability of the ink was evaluated according to the evaluation criteria described below.
A ··· 98% or more of the nozzles can jet without jetting failure, and there is no problem for practical use.
B ··· 95% or more but less than 98% of the nozzles can jet without jetting failure, and there is no problem for practical use.
C ··· 90% or more but less than 95% of the nozzles can jet without jetting failure, but there is a concern for practical use.
D ··· Less than 90% of the nozzles can jet without jetting failure, but there is a problem for practical use.

### 2. Intermittent jettability

The ink was continuously jetted through all of the nozzles of 256 ch of a POLARIS head (trade name, manufactured by Fujifilm Dimatix, Inc.) for 1 minute at a frequency of 10 kHz. For this continuous jetting, the amount of liquid droplets of the ink was set to 85 pL. After this continuous jetting for 1 minute, the jetting of ink was stopped at a defined time. Thereafter, continuous jetting was restarted under the same conditions such as described above, and the number of remaining nozzles that could jet without jetting failure after the passage of one minute from the initiation of this second continuous jetting, was counted by strobe photography.

The proportion of the number of remaining nozzles with respect to the total number of nozzles was determined based on the counting results, and intermittent jettability of the ink was evaluated according to the evaluation criteria described below.
A ··· 98% or more of the nozzles can jet without jetting failure, and there is no problem for practical use.
B ··· 95% or more but less than 98% of the nozzles can jet without jetting failure, and there is no problem for practical use.
C ··· 90% or more but less than 95% of the nozzles can jet without jetting failure, but there is a concern for practical use.
D ··· Less than 90% of the nozzles can jet without jetting failure, but there is a problem for practical use.

### 3. Image quality

The ink was continuously jetted through all of the nozzles of 256 ch of a POLARIS head (trade name, manufactured by Fujifilm Dimatix, Inc.) onto a high-quality paper, and thus a 100% solid image (200 x 200 dpi, parallel to the printing direction 60 cm x perpendicular to the printing direction 5 cm) was recorded. For this continuous jetting, the amount of liquid droplets of the ink was set to 85 pL. Recording of the image was performed under the conditions (conveyance speed and the frequency of jetting) of 30 m/min (1 kHz), 50 m/min (2 kHz), 100 m/min (4 kHz), 150 m/min (6 kHz), 200 m/min (8 kHz), and 250 m/min (10 kHz). Under these conditions, image printing was successively repeated for 10 times such that the image interval in terms of time would be 60 seconds. Images thus obtained were checked by visual inspection, and the image quality was evaluated according to the following criteria.
A ··· Density unevenness or streaks are not observed over the entirety of the image, and there is no problem for practical use.
B ··· Slight density unevenness or streaks are recognized over the entirety of the image, but there is no problem for practical use.
C ··· Density unevenness or streaks are recognized over the entirety of the image, and there is a concern for practical use.
D ··· Density unevenness or streaks are recognized over the entirety of the image, and there is a problem for practical use.

### 4. Dryability

For the image samples thus obtained, the image area was felt with a finger, and the image samples were evaluated according to the following criteria on whether the ink was transferred to the finger.
A ··· The ink is not transferred, and there is no problem for practical use.
B ··· Transfer of the ink is recognized, and there is a problem for practical use.

### 5. Storage stability

The ink was left to stand for one week at 60°C, the physical properties of the ink were measured, and the change in the physical properties was evaluated according to the following criteria.
A ··· The amount of change in viscosity is less than 0.3 mPa·s, or the amount of change in surface tension is less than 0.3 mN/m, and there is no problem for practical use.
B ··· The amount of change in viscosity is 0.3 mPa·s or more but less than 0.5 mPa·s, or the amount of change in surface tension is 0.3 mN/m or more but less than 0.5 mN/m, and there is no problem for practical use.
C ··· The amount of change in viscosity is 0.5 mPa·s or more but less than 0.8 mPa·s, or the amount of change in surface tension is 0.5 mN/m or more but less than 0.8 mN/m, and there is a concern for practical use.
D ··· The amount of change in viscosity is 0.8 mPa·s or more, or the amount of change in surface tension is 0.8 mN/m or more, and there is a problem for practical use.

### [Example 2]

An ink was prepared in the same manner as in Example 1, except that the composition of the ink was changed to Ink Composition 2 indicated below, and the ink was evaluated similarly.

### (Ink Composition 2)

- Projet Magenta APD1000 (trade name, manufactured by Fujifilm Imaging Colorants limited., magenta pigment dispersion liquid, pigment concentration: 14%) ··· 28.57 parts by mass
- Diethylene glycol* (manufactured by Tokyo Chemical Industry Co., Ltd., water-soluble organic solvent, SP value: 25.5) ··· 16 parts by mass

* In Tables 1 to 2, described as "DEG"
- Polyethylene glycol 8000 (manufactured by MP Biomedicals, LLC; water-soluble polymer, Mn: 8000, SP value: 20.62) ··· 7.6 parts by mass
- Surfactant (SURFYNOL 104PG50, manufactured by Air Products and Chemicals, Inc., number average molecular weight: 226.36, HLB: 4) ··· 0.42 parts by mass
- Polyurethane microparticles (WBR-2101, manufactured by Taisei Fine Chemical Co., Ltd., Tg: 40°C, 30% by mass) ··· 17 parts by mass
- Ion-exchanged water ··· balance (parts by mass) to make up the total amount of ink to 100 parts by mass

### [Example 3]

An ink was prepared in the same manner as in Example 1, except that the composition of the ink was changed to Ink Composition 3 indicated below, and the ink was evaluated similarly.

### (Ink Composition 3)

- Projet Magenta APD1000 (trade name, manufactured by Fujifilm Imaging Colorants limited., magenta pigment dispersion liquid, pigment concentration: 14%) ··· 28.57 parts by mass
- 2-Methyl-1,3-propanediol* (manufactured by Tokyo Chemical Industry Co., Ltd., water-soluble organic solvent, SP value: 24.17) ··· 16 parts by mass

* In Tables 1 to 2, described as "MPDO"
- Polyethylene glycol 8000 (manufactured by MP Biomedicals, LLC; water-soluble polymer, Mn: 8000, SP value: 20.62) ··· 6.6 parts by mass
- Surfactant (trade name: SURFYNOL 104PG50, manufactured by Air Products and Chemicals, Inc., number average molecular weight: 226.36, HLB: 4) ··· 0.34 parts by mass
- Polyurethane microparticles (WBR-2101, manufactured by Taisei Fine Chemical Co., Ltd., Tg: 40°C, 30% by mass) ··· 17 parts by mass
- Ion-exchanged water ··· balance (parts by mass) to make up the total amount of ink to 100 parts by mass

### [Example 4]

An ink was prepared in the same manner as in Example 1, except that the composition of the ink was changed to Ink Composition 4 indicated below, and the ink was evaluated similarly.

### (Ink Composition 4)

- Projet Magenta APD1000 (trade name, manufactured by Fujifilm Imaging Colorants limited., magenta pigment dispersion liquid, pigment concentration: 14%) ··· 28.57 parts by mass
- Tetraethylene glycol (manufactured by Tokyo Chemical Industry Co., Ltd., water-soluble organic solvent, SP value: 23.36) ··· 16 parts by mass
- Polyethylene glycol 8000 (manufactured by MP Biomedicals, LLC; water-soluble polymer, Mn: 8000, SP value: 20.62) ··· 7.3 parts by mass
- Surfactant (trade name: SURFYNOL 104PG50, manufactured by Air Products and Chemicals, Inc., number average molecular weight: 226.36, HLB: 4) ··· 0.43 parts by mass
- Polyurethane microparticles (trade name: WBR-2101, manufactured by Taisei Fine Chemical Co., Ltd., Tg: 40°C, 30% by mass) ··· 17 parts by mass
- Ion-exchanged water ··· balance (parts by mass) to make up the total amount of ink to 100 parts by mass

### [Example 5]

An ink was prepared in the same manner as in Example 1, except that the composition of the ink was changed to Ink Composition 5 indicated below, and the ink was evaluated similarly.

### (Ink Composition 5)

- Projet Magenta APD1000 (trade name, manufactured by Fujifilm Imaging Colorants limited., magenta pigment dispersion liquid, pigment concentration: 14%) ··· 28.57 parts by mass
- Dipropylene glycol* (manufactured by Tokyo Chemical Industry Co., Ltd., water-soluble organic solvent, SP value: 23) ··· 16 parts by mass

* In Tables 1 to 2, described as "DPG"
- Polyethylene glycol 8000 (manufactured by MP Biomedicals, LLC; water-soluble polymer, Mn: 8000, SP value: 20.62) ··· 6.4 parts by mass
- Surfactant (trade name: SURFYNOL 104PG50, manufactured by Air Products and Chemicals, Inc., number average molecular weight: 226.36, HLB: 4) ··· 0.27 parts by mass
- Polyurethane microparticles (trade name: WBR-2101, manufactured by Taisei Fine Chemical Co., Ltd., Tg: 40°C, 30% by mass) ··· 17 parts by mass
- Ion-exchanged water ··· balance (parts by mass) to make up the total amount of ink to 100 parts by mass

### [Example 6]

An ink having a yellow (Y) color was prepared in the same manner as in Example 5, except that the composition of the ink was changed to Ink Composition 6 indicated below, and the ink was evaluated similarly.

### (Ink Composition 6)

- Projet Yellow APD1000 (trade name, manufactured by Fujifilm Imaging Colorants limited., yellow pigment dispersion liquid, pigment concentration: 16%) ··· 25 parts by mass
- Dipropylene glycol (manufactured by Tokyo Chemical Industry Co., Ltd., water-soluble organic solvent, SP value: 23) ··· 16 parts by mass
- Polyethylene glycol 8000 (manufactured by MP Biomedicals, LLC; water-soluble polymer, Mn: 8000, SP value: 20.62) ··· 5.5 parts by mass
- Surfactant (trade name: SURFYNOL 104PG50, manufactured by Air Products and Chemicals, Inc., number average molecular weight: 226.36, HLB: 4) ··· 0.54 parts by mass
- Polyurethane microparticles (trade name: WBR-2101, manufactured by Taisei Fine Chemical Co., Ltd., Tg: 40°C, 30% by mass) ··· 17 parts by mass
- Ion-exchanged water ··· balance (parts by mass) to make up the total amount of ink to 100 parts by mass

### [Example 7]

An ink having a black (K) color was prepared in the same manner as in Example 5, except that the composition of the ink was changed to Ink Composition 7 indicated below, and the ink was evaluated similarly.

### (Ink Composition 7)

- Projet Black APD1000 (trade name, manufactured by Fujifilm Imaging Colorants limited., black pigment dispersion liquid, pigment concentration: 14%) ··· 21.4 parts by mass
- Dipropylene glycol (manufactured by Tokyo Chemical Industry Co., Ltd., water-soluble organic solvent, SP value: 23) ··· 16 parts by mass
- Polyethylene glycol 8000 (manufactured by MP Biomedicals, LLC; water-soluble polymer, Mn: 8000, SP value: 20.62) ··· 5.8 parts by mass
- Surfactant (trade name: SURFYNOL 104PG50, manufactured by Air Products and Chemicals, Inc., number average molecular weight: 226.36, HLB: 4) ··· 0.53 parts by mass
- Polyurethane microparticles (trade name: WBR-2101, manufactured by Taisei Fine Chemical Co., Ltd., Tg: 40°C, 30% by mass) ··· 17 parts by mass
- Ion-exchanged water ··· balance (parts by mass) to make up the total amount of ink to 100 parts by mass

### [Example 8]

An ink having a cyan (C) color was prepared in the same manner as in Example 5, except that the composition of the ink was changed to Ink Composition 8 indicated below, and the ink was evaluated similarly.

### (Ink Composition 8)

- Projet Cyan APD1000 (trade name, manufactured by Fujifilm Imaging Colorants limited., cyan pigment dispersion liquid, pigment concentration: 14%) ··· 14.3 parts by mass
- Dipropylene glycol (manufactured by Tokyo Chemical Industry Co., Ltd., water-soluble organic solvent, SP value: 23) ··· 16 parts by mass
- Polyethylene glycol 8000 (manufactured by MP Biomedicals, LLC; water-soluble polymer, Mn: 8000, SP value: 20.62) ··· 7.1 parts by mass
- Surfactant (trade name: SURFYNOL 104PG50, manufactured by Air Products and Chemicals, Inc., number average molecular weight: 226.36, HLB: 4) ··· 0.58 parts by mass
- Polyurethane microparticles (trade name: WBR-2101, manufactured by Taisei Fine Chemical Co., Ltd., Tg: 40°C, 30% by mass) ··· 17 parts by mass
- Ion-exchanged water ··· balance (parts by mass) to make up the total amount of ink to 100 parts by mass

### [Example 9]

An ink was prepared in the same manner as in Example 1, except that the composition of the ink was changed to Ink Composition 9 indicated below, and the ink was evaluated similarly.

### (Ink Composition 9)

- Projet Magenta APD1000 (trade name, manufactured by Fujifilm Imaging Colorants limited., magenta pigment dispersion liquid, pigment concentration: 14%) ··· 28.57 parts by mass
- Tripropylene glycol* (manufactured by Tokyo Chemical Industry Co., Ltd., water-soluble organic solvent, SP value: 21.8) ··· 16 parts by mass

* In Tables 1 to 2, described as "TPG"
- Polyethylene glycol 8000 (manufactured by MP Biomedicals, LLC; water-soluble polymer, Mn: 8000, SP value: 20.62) ··· 6.2 parts by mass
- Surfactant (trade name: SURFYNOL 104PG50, manufactured by Air Products and Chemicals, Inc., number average molecular weight: 226.36, HLB: 4) ··· 0.33 parts by mass
- Polyurethane microparticles (trade name: WBR-2101, manufactured by Taisei Fine Chemical Co., Ltd., Tg: 40°C, 30% by mass) ··· 17 parts by mass
- Ion-exchanged water ··· balance (parts by mass) to make up the total amount of ink to 100 parts by mass

### [Example 10]

An ink was prepared in the same manner as in Example 1, except that the composition of the ink was changed to Ink Composition 10 indicated below, and the ink was evaluated similarly.

### (Ink Composition 10)

- Projet Magenta APD1000 (trade name, manufactured by Fujifilm Imaging Colorants limited., magenta pigment dispersion liquid, pigment concentration: 14%) ··· 28.57 parts by mass
- Tripropylene glycol monomethyl ether* (manufactured by Tokyo Chemical Industry Co., Ltd., water-soluble organic solvent, SP value: 21.14) ··· 16 parts by mass

* In Tables 1 to 2, described as "TPGmME"
- Polyethylene glycol 8000 (manufactured by MP Biomedicals, LLC; water-soluble polymer, Mn: 8000, SP value: 20.62) ··· 5.5 parts by mass
- Surfactant (trade name: SURFYNOL 104PG50, manufactured by Air Products and Chemicals, Inc., number average molecular weight: 226.36, HLB: 4) ··· 0.42 parts by mass
- Polyurethane microparticles (trade name: WBR-2101, manufactured by Taisei Fine Chemical Co., Ltd., Tg: 40°C, 30% by mass) ··· 17 parts by mass
- Ion-exchanged water ··· balance (parts by mass) to make up the total amount of ink to 100 parts by mass

### [Example 11]

An ink was prepared in the same manner as in Example 1, except that the composition of the ink was changed to Ink Composition 11 indicated below, and the ink was evaluated similarly.

### (Ink Composition 11)

- Projet Magenta APD1000 (trade name, manufactured by Fujifilm Imaging Colorants limited., magenta pigment dispersion liquid, pigment concentration: 14%) ··· 28.57 parts by mass
- Dipropylene glycol (manufactured by Tokyo Chemical Industry Co., Ltd., water-soluble organic solvent, SP value: 23) ··· 16 parts by mass
- Polyethylene glycol 8000 (manufactured by MP Biomedicals, LLC; water-soluble polymer, Mn: 8000, SP value: 20.62) ··· 5.5 parts by mass
- Surfactant (trade name: SURFYNOL 104PG50, manufactured by Air Products and Chemicals, Inc., number average molecular weight: 226.36, HLB: 4) ··· 0.42 parts by mass
- Polyurethane microparticles (trade name: WBR-2101, manufactured by Taisei Fine Chemical Co., Ltd., Tg: 40°C, 30% by mass) ··· 17 parts by mass
- Ion-exchanged water ··· balance (parts by mass) to make up the total amount of ink to 100 parts by mass

### [Example 12]

An ink was prepared in the same manner as in Example 1, except that the composition of the ink was changed to Ink Composition 12 indicated below, and the ink was evaluated similarly.

### (Ink Composition 12)

• Projet Magenta APD1000 (trade name, manufactured by Fujifilm Imaging Colorants limited., magenta pigment dispersion liquid, pigment concentration: 14%) ··· 28.57 parts by mass
- Dipropylene glycol (manufactured by Tokyo Chemical Industry Co., Ltd., water-soluble organic solvent, SP value: 23) ··· 16 parts by mass
- Polyethylene glycol 8000 (manufactured by MP Biomedicals, LLC; water-soluble polymer, Mn: 8000, SP value: 20.62) ··· 7.4 parts by mass
- SURFYNOL 104PG50 (trade name, manufactured by Air Products and Chemicals, Inc., number average molecular weight: 226.36, HLB: 4) ··· 0.42 parts by mass
- Polyurethane microparticles (trade name: WBR-2101, manufactured by Taisei Fine Chemical Co., Ltd., Tg: 40°C, 30% by mass) ··· 17 parts by mass
- Ion-exchanged water ··· balance (parts by mass) to make up the total amount of ink to 100 parts by mass

### [Example 13]

An ink was prepared in the same manner as in Example 1, except that the composition of the ink was changed to Ink Composition 13 indicated below, and the ink was evaluated similarly.

### (Ink Composition 13)

- Projet Magenta APD1000 (trade name, manufactured by Fujifilm Imaging Colorants limited., magenta pigment dispersion liquid, pigment concentration: 14%) ··· 28.57 parts by mass
- Dipropylene glycol (manufactured by Tokyo Chemical Industry Co., Ltd., water-soluble organic solvent, SP value: 23) ··· 16 parts by mass
- Polyvinylpyrrolidone* (trade name: PVP K15, manufactured by Tokyo Chemical Industry Co., Ltd.; water-soluble polymer, Mn: 10,000, SP value: 25.37) ··· 11.08 parts by mass

* In Tables 1 and 2, described as "PVP K15"
- Surfactant (trade name: SURFYNOL 104PG50, manufactured by Air Products and Chemicals, Inc., number average molecular weight: 226.36, HLB: 4) ··· 0.42 parts by mass
- Polyurethane microparticles (trade name: WBR-2101, manufactured by Taisei Fine Chemical Co., Ltd., Tg: 40°C, 30% by mass) ··· 17 parts by mass
- Ion-exchanged water ··· balance (parts by mass) to make up the total amount of ink to 100 parts by mass

### [Example 14]

An ink was prepared in the same manner as in Example 1, except that the composition of the ink was changed to Ink Composition 14 indicated below, and the ink was evaluated similarly.

### (Ink Composition 14)

- Projet Magenta APD1000 (trade name, manufactured by Fujifilm Imaging Colorants limited., magenta pigment dispersion liquid, pigment concentration: 14%) ··· 28.57 parts by mass
- Dipropylene glycol (manufactured by Tokyo Chemical Industry Co., Ltd., water-soluble organic solvent, SP value: 23) ··· 16 parts by mass
- Polyoxyethylene glycol/polyoxypropylene glycol copolymer* (trade name: NEWPOL PE-108, manufactured by Sanyo Chemical Industries, Ltd.; water-soluble polymer, Mn: 16,500, SP value: 20.2) ··· 5.33 parts by mass

*In Tables 1 and 2, described as "PE-108"
- Surfactant (trade name: SURFYNOL 104PG50, manufactured by Air Products and Chemicals, Inc., number average molecular weight: 226.36, HLB: 4) ··· 0.42 parts by mass
- Polyurethane microparticles (trade name: WBR-2101, manufactured by Taisei Fine Chemical Co., Ltd., Tg: 40°C, 30% by mass) ··· 17 parts by mass
- Ion-exchanged water ··· balance (parts by mass) to make up the total amount of ink to 100 parts by mass

### [Example 15]

An ink was prepared in the same manner as in Example 1, except that the composition of the ink was changed to Ink Composition 15 indicated below, and the ink was evaluated similarly.

### (Ink Composition 15)

- Projet Magenta APD1000 (trade name, manufactured by Fujifilm Imaging Colorants limited., magenta pigment dispersion liquid, pigment concentration: 14%) ··· 28.57 parts by mass
- Dipropylene glycol (manufactured by Tokyo Chemical Industry Co., Ltd., water-soluble organic solvent, SP value: 23) ··· 16 parts by mass
- Polyethylene glycol 8000 (manufactured by MP Biomedicals, LLC; water-soluble polymer, Mn: 8000, SP value: 20.62) ··· 6.4 parts by mass
- SURFYNOL 440 (trade name, manufactured by Air Products and Chemicals, Inc., number average molecular weight: 380.54, HLB: 8) ··· 0.65 parts by mass
- Polyurethane microparticles (trade name: WBR-2101, manufactured by Taisei Fine Chemical Co., Ltd., Tg: 40°C, 30% by mass) ··· 17 parts by mass
- Ion-exchanged water ··· balance (parts by mass) to make up the total amount of ink to 100 parts by mass

### [Example 16]

An ink was prepared in the same manner as in Example 1, except that the composition of the ink was changed to Ink Composition 16 indicated below, and the ink was evaluated similarly.

### (Ink Composition 16)

- Projet Magenta APD1000 (trade name, manufactured by Fujifilm Imaging Colorants limited., magenta pigment dispersion liquid, pigment concentration: 14%) ··· 28.57 parts by mass
- Dipropylene glycol (manufactured by Tokyo Chemical Industry Co., Ltd., water-soluble organic solvent, SP value: 23) ··· 16 parts by mass
- Polyethylene glycol 8000 (manufactured by MP Biomedicals, LLC; water-soluble polymer, Mn: 8000, SP value: 20.62) ··· 6.4 parts by mass
- OLFINE E1008 (manufactured by Nissin Chemical Industry Co., Ltd., number average molecular weight: 578.68, HLB: 10 to 12) ··· 1 part by mass
- Polyurethane microparticles (WBR-2101, manufactured by Taisei Fine Chemical Co., Ltd., Tg: 40°C, 30% by mass) ··· 17 parts by mass
- Ion-exchanged water ··· balance (parts by mass) to make up the total amount of ink to 100 parts by mass

### [Comparative Example 1]

An ink was prepared in the same manner as in Example 1, except that the composition of the ink was changed to Ink Composition C1 indicated below, and the ink was evaluated similarly.

### (Ink Composition C1)

- Projet Magenta APD1000 (trade name, manufactured by Fujifilm Imaging Colorants limited., magenta pigment dispersion liquid, pigment concentration: 14%) ··· 28.57 parts by mass
- 2-Pyrrolidone (manufactured by Tokyo Chemical Industry Co., Ltd.) ··· 14.52 parts by mass
- 2-Methyl-1,3-propanediol* (manufactured by Tokyo Chemical Industry Co., Ltd.) ··· 7.69 parts by mass

* In Tables 1 and 2, described as "MPDO"
- Tripropylene glycol monomethyl ether (manufactured by Tokyo Chemical Industry Co., Ltd.) ··· 22.21 parts by mass
- Surfactant (trade name: OLFINE E1010, manufactured by Nissin Chemical Industry Co., Ltd., number average molecular weight: 666.88, HLB: 13 to 14) ··· 1 part by mass
- Polyurethane microparticles (trade name: WBR-2101, manufactured by Taisei Fine Chemical Co., Ltd., Tg: 40°C, 30% by mass) ··· 17 parts by mass
- Ion-exchanged water ··· balance (parts by mass) to make up the total amount of ink to 100 parts by mass

### [Comparative Example 2]

An ink was prepared in the same manner as in Example 1, except that the composition of the ink was changed to Ink Composition C2 indicated below, and the ink was evaluated similarly.

### (Ink Composition C2)

Meanwhile, for the cyan pigment, the polymer dispersant P-1, and the self-dispersing polymer microparticles P-2, those materials produced according to JP2010-70669A were used.
- Cyan pigment (Pigment Blue 15:3) ··· 3 parts by mass
- Polymers dispersant P-1 ··· 1.5 parts by mass
- Self-dispersing polymer P-2 ··· 6 parts by mass
- Dipropylene glycol (manufactured by Tokyo Chemical Industry Co., Ltd., water-soluble organic solvent, SP value: 23) ··· 15 parts by mass
- Surfactant (trade name: OLFINE E1010, manufactured by Nissin Chemical Industry Co., Ltd., number average molecular weight: 666.88, HLB: 13 to 14) ··· 1 part by mass
- Polyethylene glycol 20000* (manufactured by Wako Pure Chemical Industries, Ltd., water-soluble polymer, Mn: 20,000, SP value: 20.62) ··· 0.5 parts by mass

* In Tables 1 and 2, described as "PEG20000"
- Ion-exchanged water ··· balance (parts by mass) to make up the total amount of ink to 100 parts by mass

### [Comparative Example 3]

An ink was prepared in the same manner as in Example 1, except that the composition of the ink was changed to Ink Composition C3 indicated below, and the ink was evaluated similarly.

### (Ink Composition C3)

- Projet Magenta APD1000 (trade name, manufactured by Fujifilm Imaging Colorants limited., magenta pigment dispersion liquid, pigment concentration: 14%) ··· 28.57 parts by mass
- Dipropylene glycol (manufactured by Tokyo Chemical Industry Co., Ltd., water-soluble organic solvent, SP value: 23) ··· 16 parts by mass
- Polyethylene glycol 8000 (manufactured by MP Biomedicals, LLC; water-soluble polymer, Mn: 8000, SP value: 20.62) ··· 4 parts by mass
- Surfactant (trade name: SURFYNOL 104PG50, manufactured by Air Products and Chemicals, Inc., number average molecular weight: 226.36, HLB: 4) ··· 0.42 parts by mass
- Polyurethane microparticles (trade name: WBR-2101, manufactured by Taisei Fine Chemical Co., Ltd., Tg: 40°C, 30% by mass) ··· 17 parts by mass
- Ion-exchanged water ··· balance (parts by mass) to make up the total amount of ink to 100 parts by mass

### [Comparative Example 4]

An ink was prepared in the same manner as in Example 1, except that the composition of the ink was changed to Ink Composition C4 indicated below, and the ink was evaluated similarly.

### (Ink Composition C4)

- Projet Magenta APD1000 (trade name, manufactured by Fujifilm Imaging Colorants Limited., magenta pigment dispersion liquid, pigment concentration: 14%) ··· 28.57 parts by mass
- Dipropylene glycol (manufactured by Tokyo Chemical Industry Co., Ltd., water-soluble organic solvent, SP value: 23) ··· 16 parts by mass
- Polyethylene glycol 8000 (manufactured by MP Biomedicals, LLC; water-soluble polymer, Mn: 8000, SP value: 20.62) ··· 8 parts by mass
- Surfactant (trade name: SURFYNOL 104PG50, manufactured by Air Products and Chemicals, Inc., number average molecular weight: 226.36, HLB: 4) ··· 0.42 parts by mass
- Polyurethane microparticles (trade name: WBR-2101, manufactured by Taisei Fine Chemical Co., Ltd., Tg: 40°C, 30% by mass) ··· 17 parts by mass
- Ion-exchanged water ··· balance (parts by mass) to make up the total amount of ink to 100 parts by mass

### [Comparative Example 5]

An ink was prepared in the same manner as in Example 1, except that the composition of the ink was changed to Ink Composition C5 indicated below, and the ink was evaluated similarly.

### (Ink Composition C5)

- Projet Magenta APD1000 (trade name, manufactured by Fujifilm Imaging Colorants limited., magenta pigment dispersion liquid, pigment concentration: 14%) ··· 28.57 parts by mass
- Dipropylene glycol (manufactured by Tokyo Chemical Industry Co., Ltd., water-soluble organic solvent, SP value: 23) ··· 16 parts by mass
- Polyethylene glycol 8000 (manufactured by MP Biomedicals, LLC; water-soluble polymer, Mn: 8000, SP value: 20.62) ··· 6.4 parts by mass
- Surfactant (OLFINE E1020, manufactured by Nissin Chemical Industry Co., Ltd., number average molecular weight: 1107.41, HLB: 13 to 14) ··· 1 part by mass
- Polyurethane microparticles (WBR-2101, manufactured by Taisei Fine Chemical Co., Ltd., Tg: 40°C, 30% by mass) ··· 17 parts by mass
- Ion-exchanged water ··· balance (parts by mass) to make up the total amount of ink to 100 parts by mass

**[Table 1]**

| | Water-soluble polymer | Water-soluble organic solvent | HLB of surfactant | SP value of solvent | ΔSP value of water-soluble polymer | Ink color | Ink properties | | Evaluation results | | | | | | | | | |
|---|---|---|---|---|---|---|---|---|---|---|---|---|---|---|---|---|---|---|
| | | | | | | | Viscosity | Surface tension | Storage stability | Continuous jettability | Intermittent jettability | Image quality | | | | | | Dryability |
| | | | | | | | | | | | | 30 m/s | 50 m/s | 100 m/s | 150 m/s | 200 m/s | 250 m/s | |
| Example 1 | PEG8000 | 2-Pyrrolidone | 4 | 29.12 | 8.5 | M | 12.13 | 35.2 | B | B | B | A | A | A | B | B | B | A |
| Example 2 | PEG8000 | DEG | 4 | 25.5 | 4.88 | M | 12.32 | 35.6 | B | B | B | A | A | A | B | B | B | A |
| Example 3 | PEG8000 | MPDO | 4 | 24.17 | 3.55 | M | 12.16 | 36.3 | B | B | B | A | A | A | A | B | B | A |
| Example 4 | PEG8000 | Tetraethylene glycol | 4 | 23.36 | 2.74 | M | 12.08 | 35.3 | B | A | A | A | A | A | A | A | A | A |
| Example 5 | PEG8000 | DPG | 4 | 23 | 2.38 | M | 11.66 | 36.2 | A | A | A | A | A | A | A | A | A | A |
| Example 6 | PEG8000 | DPG | 4 | 23 | 2.38 | Y | 12.01 | 35.8 | A | A | A | A | A | A | A | A | A | A |
| Example 7 | PEG8000 | DPG | 4 | 23 | 2.38 | K | 12.32 | 36.1 | A | A | A | A | A | A | A | A | A | A |
| Example 8 | PEG8000 | DPG | 4 | 23 | 2.38 | C | 11.88 | 35.7 | A | A | A | A | A | A | A | A | A | A |
| Example 9 | PEG8000 | TPG | 4 | 21.8 | 1.18 | M | 12.07 | 35.2 | B | A | A | A | A | A | A | A | A | A |
| Example 10 | PEG8000 | TPGmME | 4 | 21.14 | 0.52 | M | 11.66 | 36.6 | B | B | B | A | A | A | A | B | B | A |
| Example 11 | PEG8000 | DPG | 4 | 23 | 2.38 | M | 10.23 | 36 | A | A | A | A | A | A | A | A | A | A |
| Example 12 | PEG8000 | DPG | 4 | 23 | 2.38 | M | 13.92 | 36.1 | A | A | A | A | A | A | A | A | A | A |

**[Table 2]**

| | Water-soluble polymer | Water-oluble organic solvent | HLB of surfactant | SP value of solvent | ΔSP value of water-soluble polymer | Ink color | Ink properties | | Evaluation results | | | | | | | | | |
|---|---|---|---|---|---|---|---|---|---|---|---|---|---|---|---|---|---|---|
| | | | | | | | Viscosity | Surface tension | Storage stability | Continuous jettability | Intermittent jettability | Image quality | | | | | | Dryability |
| | | | | | | | | | | | | 30 m/s | 50 m/s | 100 m/s | 150 m/s | 200 m/s | 250 m/s | |
| Example 13 | PVPK15 | DPG | 4 | 23 | 2.37 | M | 12.23 | 35.9 | A | A | A | A | A | A | A | A | A | A |
| Example 14 | PE-108 | DPG | 4 | 23 | 2.8 | M | 11.89 | 36.3 | B | B | B | A | A | A | B | B | B | A |
| Example 15 | PEG8000 | DPG | 8 | 23 | 2.38 | M | 11.35 | 35.4 | A | A | A | A | A | A | A | A | A | A |
| Example 16 | PEG8000 | DPG | 10-12 | 23 | 2.38 | M | 11.77 | 35.1 | A | B | B | A | A | B | B | B | B | A |
| Comparative Example 1 | - | 2-Pyrrolidone MPDO TPGmME | 13-14 | 23.73 | - | M | 12.01 | 36.8 | D | A | D | A | A | B | B | B | C | B |
| Comparative Example 2 | PEG20000 | DPG | 13-14 | 23 | 2.38 | M | 3.71 | 36.1 | B | D | D | D | D | D | D | D | D | A |
| Comparative Example 3 | PEG8000 | DPG | 4 | 23 | 2.38 | M | 7.32 | 36.2 | A | C | C | A | B | B | C | C | C | A |
| Comparative Example 4 | PEG8000 | DPG | 4 | 23 | 2.38 | M | 15.08 | 35.7 | C | C | C | A | B | B | B | C | C | A |
| Comparative Example 5 | PEG8000 | DPG | 13-14 | 23 | 2.38 | M | 11.56 | 35.6 | B | C | D | B | B | C | C | C | C | A |

As shown in Tables 1 and 2, it is understood that in Example 1 to Example 16 to which the image forming method of the present invention was applied, since inks having excellent storage stability even at a high temperature are used, the inks exhibit both excellent continuous jettability and excellent intermittent jettability even under the conditions of jetting of large liquid droplets and produce images with satisfactory dryability, and therefore, the inks are adequate for high-speed printing. Furthermore, the images formed by the image forming method of the present invention exhibited excellent image qualities.

On the contrary, in Comparative Example 1 that used an ink which did not contain a water-soluble polymer, the ink had poor storage stability and poor intermittent jettability, and the dryability of images was also at a level that there was a problem for practical use. In Comparative Example 2 and Comparative Example 5 in which surfactants having HLB values that were not within the scope of the present invention were used, and in Comparative Example 3 and Comparative Example 4 in which the ink viscosity was not within the scope of the present invention, both the continuous jettability and the intermittent jettability were poor, and it can be seen that the quality of the images thus formed were not at a level satisfactory for practical use.

## Claims

1. An image forming method comprising forming an image by jetting, onto a recording medium, an ink composition as liquid droplets each having a volume of from 60 pL to 120 pL, by using an inkjet head, the ink composition comprising a water-soluble polymer having a number average molecular weight of 1,000 or more, a water-soluble organic solvent, and a surfactant having an HLB in a range of from 3 to 12 and a number average molecular weight of less than 1,000, and the ink composition having a viscosity at 30°C in a range of from 10 mPa-sto 14 mPa·s.

2. An image forming method according to Claim 1, wherein the difference between the SP value of the water-soluble polymer and the SP value of the water-soluble organic solvent is from 1 to 5.

3. An image forming method according to Claim 1 or Claim 2, wherein the content of the water-soluble polymer in the ink composition is from 1% by mass to 16% by mass.

4. An image forming method according to any preceding claim, wherein the SP value of the water-soluble polymer is in a range of from 19 to 31.

5. An image forming method according to any preceding claim, wherein the difference between the SP value of the water-soluble polymer and the SP value of the water-soluble organic solvent is from 1 to 5, and wherein the SP value of the water-soluble polymer is in a range of from 19 to 31.

6. An image forming method according to any preceding claim, wherein the SP value of the water-soluble organic solvent is in a range of from 21 to 30.

7. An image forming method according to any preceding claim, wherein the difference between the SP value of the water-soluble polymer and the SP value of the water-soluble organic solvent is from 1 to 5, and wherein the SP value of the water-soluble organic solvent is in a range of from 21 to 30.

8. An image forming method according to any preceding claim, wherein the difference between the SP value of the water-soluble polymer and the SP value of the water-soluble organic solvent is from 1 to 5, wherein the SP value of the water-soluble polymer is in a range of from 19 to 31, and wherein the SP value of the water-soluble organic solvent is in a range of from 21 to 30.

9. An image forming method according to any preceding claim, wherein the ink composition further comprises polymer particles.

10. An image forming method according to Claim 9, wherein the polymer particles are particles of a polymer having a polyurethane structure.

11. An image forming method according to Claim 10, wherein the polyurethane has a structure represented by the following Formula: 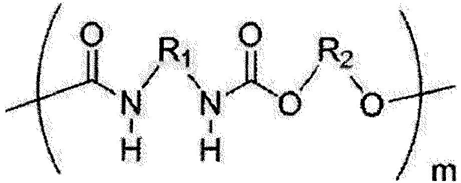 wherein R₁ represents an aliphatic group or an aromatic group; R₂ represents a residue of a diol compound; and m represents an integer such that the polyurethane has a weight average molecular weight of 3000 to 300,000 measured using gel permeation chromatography and calculated relative to polystyrene standards.

12. An image forming method according to any preceding claim, wherein the ink composition has a surface tension in a range of from 35 mN/m to 37 mN/m.

13. An image forming method according to any preceding claim, wherein a surface of a nozzle unit of the inkjet head contains metal or a silicon-containing compound.

## Patentansprüche

1. Verfahren zur Bilderzeugung, umfassend das Erzeugen eines Bildes durch Ausstoßen einer Tintenzusammensetzung als flüssige Tröpfchen, die jeweils ein Volumen von 60 pL bis 120 pL aufweisen, auf ein Aufzeichnungsmedium unter Verwendung eines Tintenstrahlkopfs, wobei die Tintenzusammensetzung ein wasserlösliches Polymer mit einem zahlengemittelten Molekulargewicht von 1.000 oder größer, ein wasserlösliches organisches Lösungsmittel und ein Tensid mit einem HLB-Wert im Bereich von 3 bis 12 und einem zahlengemittelten Molekulargewicht von kleiner als 1.000 umfasst, und worin die Tintenzusammensetzung eine Viskosität bei 30°C im Bereich von 10 mPa·s bis 14 mPa·s aufweist.

2. Verfahren zur Bilderzeugung gemäß Anspruch 1, worin der Unterschied zwischen dem SP-Wert des wasserlöslichen Polymers und dem SP-Wert des wasserlöslichen organischen Lösungsmittels von 1 bis 5 beträgt.

3. Verfahren zur Bilderzeugung gemäß Anspruch 1 oder Anspruch 2, worin der Gehalt des wasserlöslichen Polymers in der Tintenzusammensetzung von 1 Masse-% bis 16 Masse-% beträgt.

4. Verfahren zur Bilderzeugung gemäß irgendeinem vorhergehenden Anspruch, worin der SP-Wert des wasserlöslichen Polymers im Bereich von 19 bis 31 liegt.

5. Verfahren zur Bilderzeugung gemäß irgendeinem vorhergehenden Anspruch, worin der Unterschied zwischen dem SP-Wert des wasserlöslichen Polymers und dem SP-Wert des wasserlöslichen organischen Lösungsmittels von 1 bis 5 beträgt und worin der SP-Wert des wasserlöslichen Polymers im Bereich von 19 bis 31 beträgt.

6. Verfahren zur Bilderzeugung gemäß irgendeinem vorhergehenden Anspruch, worin der SP-Wert des wasserlöslichen organischen Lösungsmittels im Bereich von 21 bis 30 liegt.

7. Verfahren zur Bilderzeugung gemäß irgendeinem vorhergehenden Anspruch, worin der Unterschied zwischen dem SP-Wert des wasserlöslichen Polymers und dem SP-Wert des wasserlöslichen organischen Lösungsmittels von 1 bis 5 beträgt und worin der SP-Wert des wasserlöslichen organischen Lösungsmittels im Bereich von 21 bis 30 liegt.

8. Verfahren zur Bilderzeugung gemäß irgendeinem vorhergehenden Anspruch, worin der Unterschied zwischen dem SP-Wert des wasserlöslichen Polymers und dem SP-Wert des wasserlöslichen organischen Lösungsmittels von 1 bis 5 beträgt, worin der SP-Wert des wasserlöslichen Polymers im Bereich von 19 bis 31 liegt und worin der SP-Wert des wasserlöslichen organischen Lösungsmittels im Bereich von 21 bis 30 liegt.

9. Verfahren zur Bilderzeugung gemäß irgendeinem vorhergehenden Anspruch, worin die Tintenzusammensetzung ferner Polymerpartikel umfasst.

10. Verfahren zur Bilderzeugung gemäß Anspruch 9, worin die Polymerpartikel Partikel eines Polymers mit einer Polyurethanstruktur sind.

11. Verfahren zur Bilderzeugung gemäß Anspruch 10, worin das Polyurethan eine durch die folgende Formel dargestellte Struktur aufweist: 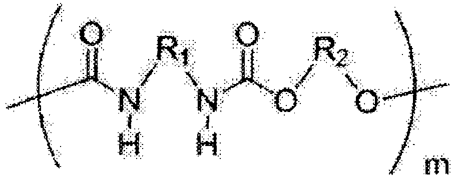 worin R₁ eine aliphatische Gruppe oder eine aromatische Gruppe darstellt; R₂ einen Rest einer Diolverbindung darstellt; und m eine solche ganze Zahl darstellt, dass das Polyurethan ein gewichtsgemitteltes Molekulargewicht von 3.000 bis 300.000 aufweist, gemessen unter Verwendung von Gelpermeationschromatographie und berechnet relativ auf Polystyrol-Standards.

12. Verfahren zur Bilderzeugung gemäß irgendeinem vorhergehenden Anspruch, worin die Tintenzusammensetzung eine Oberflächenspannung im Bereich von 35 mN/m bis 27 mN/m aufweist.

13. Verfahren zur Bilderzeugung gemäß irgendeinem vorhergehenden Anspruch, worin eine Oberfläche einer Düseneinheit des Tintenstrahlkopfs Metall oder eine Silicium-haltige Verbindung enthält.

## Revendications

1. Procédé de formation d'image comprenant la formation d'une image par projection, sur un support d'enregistrement, d'une composition d'encre sous la forme de gouttelettes de liquide, chacune possédant un volume de 60 pL à 120 pL, en utilisant une tête à jet d'encre, la composition d'encre comprenant un polymère soluble dans l'eau possédant un poids moléculaire moyen en nombre de 1000 ou plus, un solvant organique soluble dans l'eau et un agent tensioactif possédant une valeur HLB dans une plage de 3 à 12 et un poids moléculaire moyen en nombre inférieur à 1000, et la composition d'encre possédant une viscosité à 30 °C dans une plage de 10 mPa*s à 14 mPa*s.

2. Procédé de formation d'image selon la revendication 1, dans lequel la différence entre la valeur SP du polymère soluble dans l'eau et la valeur SP du solvant organique soluble dans l'eau s'élève de 1 à 5.

3. Procédé de formation d'image selon la revendication 1 ou 2, dans lequel la teneur de la composition d'encre en polymère soluble dans l'eau s'élève de 1 % en masse à 16 % en masse.

4. Procédé de formation d'image selon l'une quelconque des revendications précédentes, dans lequel la valeur SP du polymère soluble dans l'eau se situe dans une plage de 19 à 31.

5. Procédé de formation d'image selon l'une quelconque des revendications précédentes, dans lequel la différence entre la valeur SP du polymère soluble dans l'eau et la valeur SP du solvant organique soluble dans l'eau s'élève de 1 à 5, et dans lequel la valeur SP du polymère soluble dans l'eau se situe dans une plage de 19 à 31.

6. Procédé de formation d'image selon l'une quelconque des revendications précédentes, dans lequel la valeur SP du solvant organique soluble dans l'eau se situe dans une plage de 21 à 30.

7. Procédé de formation d'image selon l'une quelconque des revendications précédentes, dans lequel la différence entre la valeur SP du polymère soluble dans l'eau et la valeur SP du solvant organique soluble dans l'eau s'élève de 1 à 5, et dans lequel la valeur SP du solvant organique soluble dans l'eau se situe dans une plage de 21 à 30.

8. Procédé de formation d'image selon l'une quelconque des revendications précédentes, dans lequel la différence entre la valeur SP du polymère soluble dans l'eau et la valeur SP du solvant organique soluble dans l'eau s'élève de 1 à 5, dans lequel la valeur SP du polymère soluble dans l'eau se situe dans une plage de 19 à 31, et dans lequel la valeur SP du solvant organique soluble dans l'eau se situe dans une plage de 21 à 30.

9. Procédé de formation d'image selon l'une quelconque des revendications précédentes, dans lequel la composition d'encre comprend en outre des particules de polymère.

10. Procédé de formation d'image selon la revendication 9, dans lequel les particules de polymère sont des particules d'un polymère possédant une structure de polyuréthane.

11. Procédé de formation d'image selon la revendication 10, dans lequel le polyuréthane possède une structure représentée par la formule suivante : 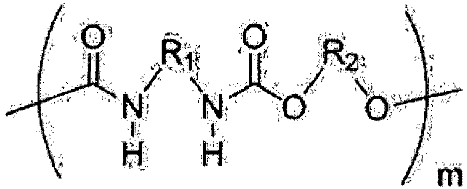 dans laquelle R₁ représente un groupe aliphatique ou un groupe aromatique ; R₂ représente un résidu d'un composé de diol ; et m représente un entier tel que le polyuréthane possède un poids moléculaire moyen en poids de 3 000 à 300 000, mesuré en utilisant une chromatographie par perméation sur gel et calculé par rapport à des normes de polystyrène.

12. Procédé de formation d'image selon l'une quelconque des revendications précédentes, dans lequel la composition d'encre possède une tension superficielle dans une plage de 35 mN/m à 37 mN/m.

13. Procédé de formation d'image selon l'une quelconque des revendications précédentes, dans lequel une surface d'une unité de buse de la tête à jet d'encre contient un métal ou un composé contenant du silicium.
